# EUROPEAN PATENT SPECIFICATION

(11) **EP 4 442 569 B1**
(45) Date of publication and mention of the grant of the patent: **12.08.2026**
(21) Application number: 22900985.7
(22) Date of filing: 27.10.2022
(51) Int. Cl.: B64D 11/02, E05F 1/14, E05F 15/41, E05F 15/74

(54) **DOOR OPENING AND CLOSING MECHANISM OF AIRCRAFT LAVATORY UNIT**
TÜRÖFFNUNGS- UND -SCHLIESSMECHANISMUS EINER FLUGZEUGTOILETTENEINHEIT
MÉCANISME D'OUVERTURE ET DE FERMETURE DE PORTE D'UNITÉ DE TOILETTES D'AÉRONEF

(30) Priority: 02.12.2021 JP 2021196391
(43) Date of publication of application: 09.10.2024
(73) Proprietor: The Yokohama Rubber Co., Ltd., Hiratsuka-shi, Kanagawa 254-8601 (JP)
(72) Inventor: MASUDA, Mitsutaka, Hiratsuka-shi, Kanagawa 254-8601 (JP); SUZUKI, Yushi, Hiratsuka-shi, Kanagawa 254-8601 (JP)
(74) Representative: Dilg, Haeusler, Schindelmann Patentanwaltsgesellschaft mbH
(86) International application number: PCT/JP2022/040083
(87) International publication number: WO 2023/100552

(56) References cited:
- EP-A2- 3 940 510
- JP-A- 2016 069 791
- JP-A- H11 315 667
- JP-A- H11 315 667
- JP-B1- 5 864 806
- US-A1- 2014 196 372
- US-A1- 2014 196 372
- US-A1- 2021 363 811

## Description

### Technical Field

The present invention relates to a door opening and closing mechanism of an entrance of an aircraft lavatory unit.

### Background Art

A door for opening and closing an entrance of an aircraft lavatory unit is always biased by a spring to the closed position for closing the entrance and is configured such that the entrance is opened by manually moving the door from the closed position to the open position.

In recent years, measures to prevent transmission of novel coronavirus have been widely implemented in many countries around the world. Many of the transmission of novel coronavirus is said to be caused by the virus adhering to hands and fingers through contact with objects and then touching the eyes, nose, or mouth with those hands and fingers.

Measures against the transmission of novel coronavirus are preferably taken also in an interior of the aircraft.

The present inventor has focused on the door for opening and closing the entrance of the aircraft lavatory unit that is manually opened and closed and has considered that it would be advantageous in preventing the transmission of novel coronavirus in the interior if the user can enter and leave the aircraft lavatory unit without contacting the door.

In this case, as with general automatic doors, it is conceivable to provide, outside the lavatory, a detection sensor that detects in a non-contact manner a user using the lavatory, provide an actuator that moves the door, and cause the actuator to automatically move the door from the closed position to the open position in response to a detection result of the detection sensor.

### Citation List

### Patent Literature

Patent Document 1: JP 2013-224525 A
Patent Document 2: US 2014/196372 A1 discloses an aircraft lavatory comprising a first sensor configured to detect a signal from a person in close proximity to the sensor and to output an open command to a motor assembly that opens a lavatory door.
Patent Document 3: US 2021/363811 A1 discloses a system for touch free operation of a lavatory door, comprising an exterior touchless sensor operatively connected to an actuator and configured to unlatch a latch assembly upon receipt of touchless input from a user.

### Summary of Invention

### Technical Problem

However, due to the limited space of the interior in the aircraft, passengers who do not use the lavatory often pass across the detection range of the detection sensor provided outside of the lavatory, or cabin attendants often stop within the detection range of the detection sensor provided outside the lavatory to perform services for food and drink.

As such, if the detection sensor detects passengers and cabin attendants who do not intend to use the lavatory, erroneous operations in which the door is moved to the open position even though it is not necessary may occur.

In view of the above-described circumstances, an object of the present invention is to provide a door opening and closing mechanism of an entrance of an aircraft lavatory unit that is advantageous in improving user-friendliness of the lavatory by reducing erroneous operations of the door while preventing the transmission of novel coronavirus in the interior.

### Solution to Problem

To achieve the object, a door opening and closing mechanism of an entrance of an aircraft lavatory unit according to an embodiment of the present invention includes a door manually movable between a closed position for closing an entrance of a lavatory and an open position for opening the entrance and always biased to be at the closed position; and a powered door opening mechanism configured to move the door from the closed position to the open position. The powered door opening mechanism includes an outdoor non-contact sensor provided on outside of the lavatory and configured to detect in a non-contact manner operation of a person holding a hand over the outdoor non-contact sensor, a human detecting sensor configured to detect presence of a person inside the lavatory, an actuator configured to move the door, and a control unit configured to control the actuator. The control unit causes, by the outdoor non-contact sensor detecting a person when the human detecting sensor detects nothing, the actuator to move the door from the closed position to the open position. When the human detecting sensor detects a person, the door is located at the open position, and a first predetermined time has elapsed, the control unit causes the actuator to move the door from the open position to the closed position.

### Advantageous Effects of Invention

According to an embodiment of the present invention, in the case where the human detecting sensor detects nothing, the control unit causes the actuator to move the door from the closed position to the open position when detection of the outdoor non-contact sensor that detects in a non-contact manner operation of a person holding a hand over the outdoor non-contact sensor is turned on.

Thus, the user of the lavatory can open the door by only holding a hand over the outdoor non-contact sensor without contacting the door of the lavatory or the contact sensor, which is advantageous in preventing the transmission of novel coronavirus in the interior.

The outdoor non-contact sensor does not detect a hand unless the user intentionally holds a hand over the outdoor non-contact sensor, and thus, even when a person passes through the vicinity of the outdoor non-contact sensor or when a crew stops and works in the vicinity of the outdoor non-contact sensor, the outdoor non-contact sensor does not perform detection operation, which is advantageous in improving the user-friendliness of the lavatory by reducing the opening operation of the door due to erroneous operation.

### Brief Description of Drawings

FIG. 1 is a perspective view of the inside of a lavatory of an aircraft lavatory unit of a first embodiment in which illustration of one side wall and a door is omitted.
FIG. 2 is a front view of a front wall and a door located at a closed position and closing an entrance as viewed from the outside of the lavatory.
FIG. 3 is a front view of the front wall and the door located at the closed position and closing the entrance as viewed from the inside of the lavatory.
FIG. 4 is an explanatory diagram of an attaching state of a bracket and a roller serving as an engaged member to a first door member, FIG. 4(A) is a perspective view of the attaching state of the bracket and the roller, and FIG. 4(B) is a plan view of the same.
FIG. 5 is a side view of a powered door opening mechanism including a power transmission mechanism in a state where the door is located at the closed position as viewed from the second side wall side inside the lavatory.
FIG. 6 is a view of the powered door opening mechanism including the power transmission mechanism in a state where the door is located at the closed position as viewed from the lower side inside the lavatory.
FIG. 7(A) is a side view of an attaching state of an arm making up an engaging member, and FIG. 7(B) is a cross-sectional plan view of a state where an end portion of a belt is attached to a roller at an end of the arm.
FIG. 8 is a sectional view of a state where the arm making up the engaging member is rotatably attached to an arm support shaft.
FIG. 9 is a perspective view of an attaching state of the arm making up the engaging member.
FIG. 10 is a plan view of an attaching state of the arm making up the engaging member.
FIG. 11 is a schematic plan view of the powered door opening mechanism including the power transmission mechanism in a state where the door is located at the closed position.
FIG. 12 is a schematic plan view of the powered door opening mechanism including the power transmission mechanism in a state where the door is located at the open position.
FIG. 13 is a perspective view of a front wall where the entrance of the aircraft lavatory unit is closed by the door, a ceiling wall where the powered door opening mechanism is attached, and a second side wall connecting the front wall and the ceiling wall.
FIG. 14 is a perspective view of the powered door opening mechanism including the power transmission mechanism.
FIG. 15 is a plan view of the powered door opening mechanism including the power transmission mechanism.
FIG. 16 is a side view of the powered door opening mechanism including the power transmission mechanism.
FIG. 17 is a block diagram illustrating a configuration of a control system of the powered door opening mechanism.
FIG. 18 is a first flowchart illustrating an opening and closing operation of the powered door opening mechanism.
FIG. 19 is a second flowchart illustrating an opening and closing operation of the powered door opening mechanism.
FIG. 20 is a flowchart illustrating operation for a case where the door of the powered door opening mechanism interferes with a person or object.
FIG. 21 is a schematic plan view of a powered door opening mechanism of a second embodiment in a state where the door is located at the closed position.
FIG. 22 is a schematic plan view of the powered door opening mechanism of the second embodiment in a state where the door is located at the open position.
FIG. 23 is a plan view illustrating a relationship between a roller making up an engaged member provided in a first door member and a curved plate making up an engaging member provided in a slider.
FIG. 24 is a block diagram illustrating a configuration of a control system of the powered door opening mechanism of the second embodiment.

### Description of Embodiments

An embodiment of the present invention is described below.

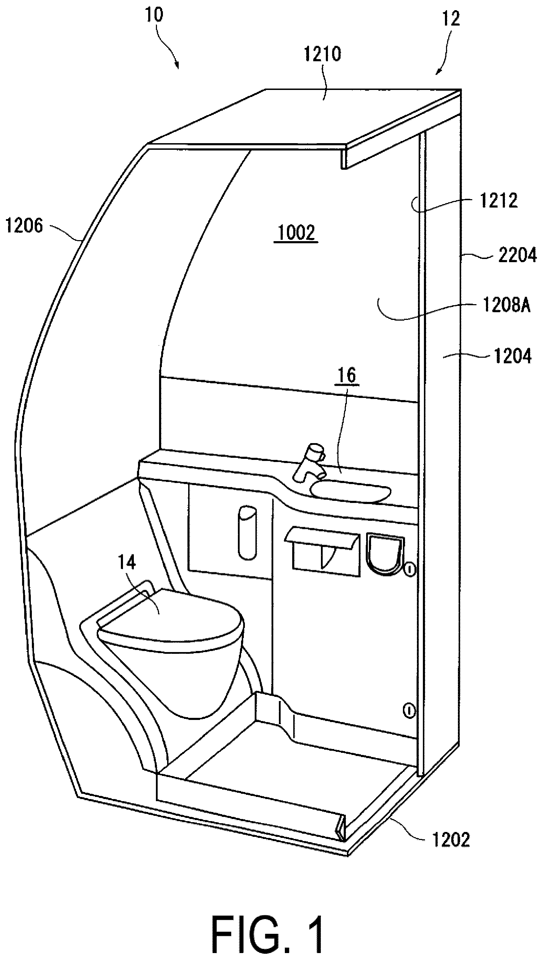

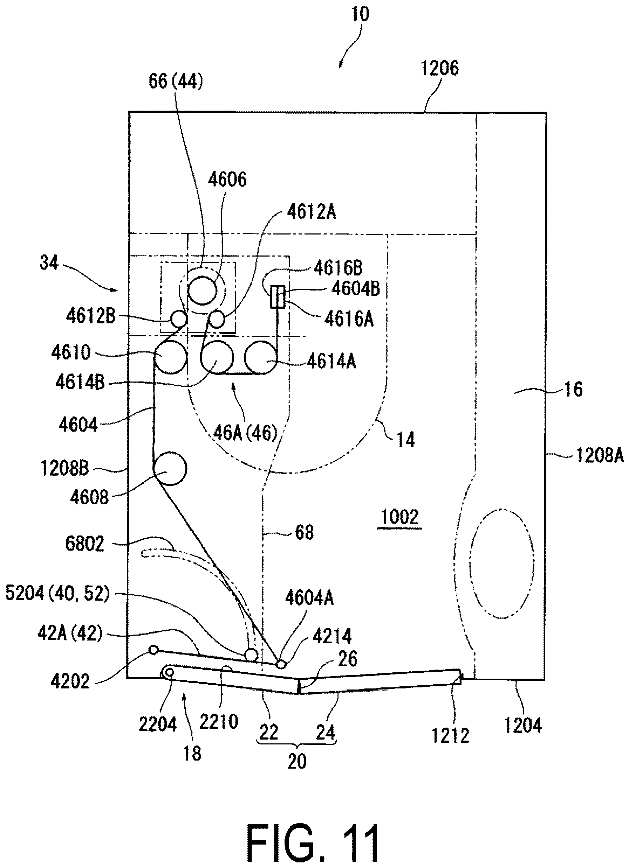

As illustrated in FIG. 1, a housing 12 of an aircraft lavatory unit 10 includes a floor board 1202, a front wall 1204 and a rear wall 1206 standing upright from the floor board 1202 and facing each other, a first side wall 1208A and a second side wall 1208B standing upright from the floor board 1202 and connecting both sides of the front wall 1204 and the rear wall 1206 (see FIG. 11), and a ceiling wall 1210, a toilet 14 is provided at the floor board 1202 at a location of relatively closer to the rear wall 1206, a sink 16 is provided at the first side wall 1208A, and thus the interior of the housing 12 is a lavatory 1002.

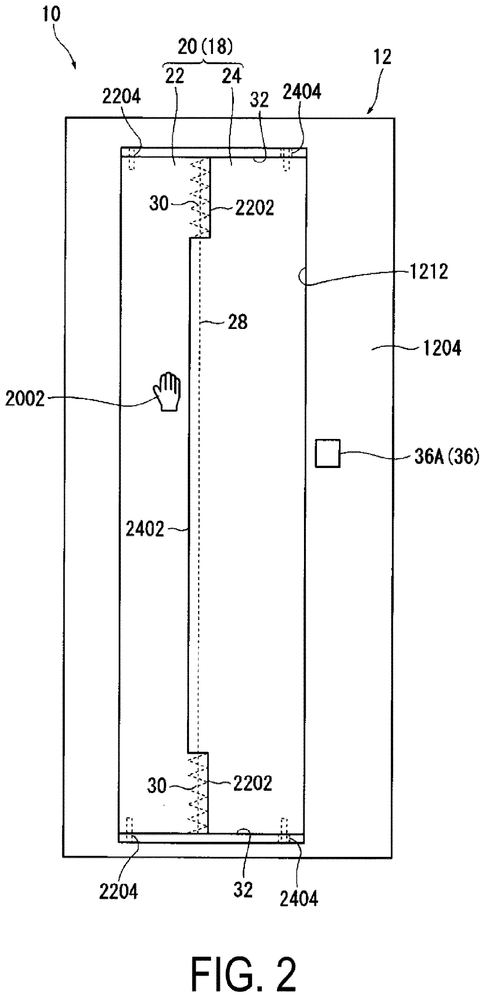

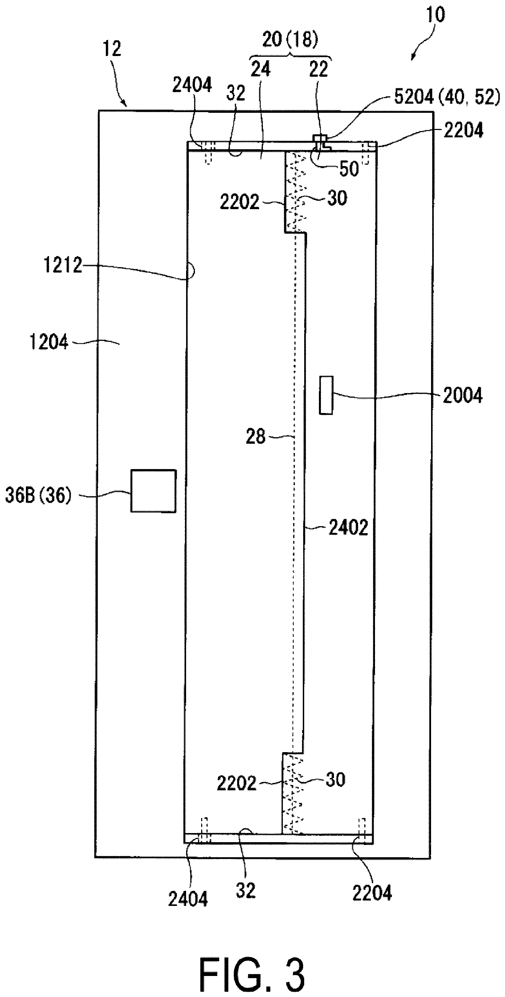

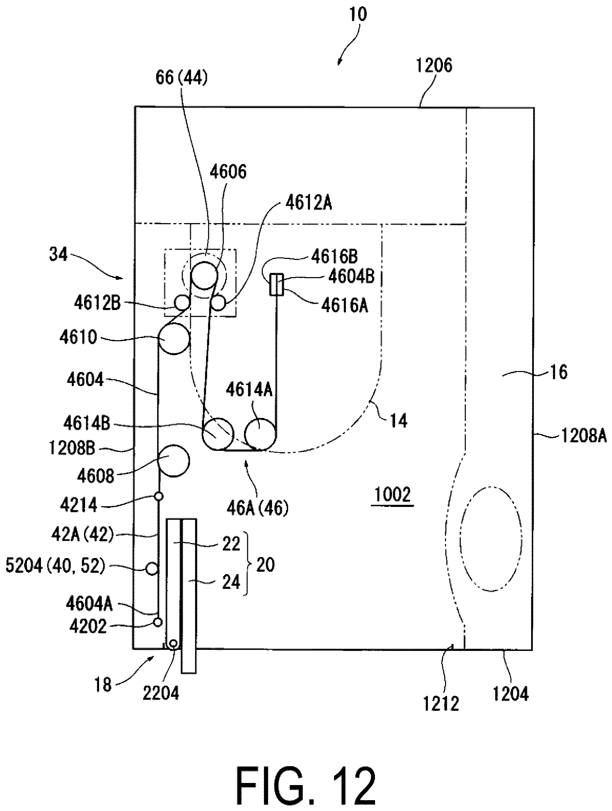

In the front wall 1204, an entrance 1212 of the lavatory 1002 is provided on the side relatively closer to the second side wall 1208B as illustrated in FIGS. 11 and 12, and the entrance 1212 is opened and closed with a door opening and closing mechanism 18 as illustrated in FIGS. 2 and 3.

The door opening and closing mechanism 18 includes a door 20 that can manually open and close the entrance 1212. The door 20 is supported in a movable manner between a closed position where the entrance 1212 is closed as illustrated in FIGS. 2, 3, and 11 and an open position where the entrance 1212 is opened as illustrated in FIG. 12, and always biased to be at the closed position.

As illustrated in FIGS. 2 and 3, the door 20 has a width and a height corresponding to the entrance 1212.

The door 20 is a folding-type door composed of two door members, namely a first door member 22 and a second door member 24 that are coupled with each other in a mutually foldable manner.

In the state where the first door member 22 and the second door member 24 are in an unfolded state as illustrated in FIGS. 2, 3, and 11, the door 20 is set to the closed position for closing the entrance 1212, whereas in the state where the first door member 22 and the second door member 24 are folded and overlapped inside the lavatory 1002 as illustrated in FIG. 12, the door 20 is set to the open position for opening the entrance 1212.

As illustrated in FIG. 11, at the closed position of the door 20, a part 26 where the first door member 22 and the second door member 24 are coupled is displaced in the direction away from the lavatory 1002 more than both ends of the door 20 in the width direction in plan view.

This prevents the door 20 from being opened with the first door member 22 and the second door member 24 swung due to the load of acceleration during landing or takeoff of the aircraft, and reliably maintains the closed position of the door 20.

The present invention is naturally applicable to a case where the first door member 22 and the second door member 24 linearly extend at the closed position of the door 20 in plan view.

As illustrated in FIGS. 2 and 3, a first bracket 2202 is provided in a projecting manner at the upper portion and lower portion of the end portion where the first door member 22 faces the second door member 24, and a second bracket 2402, which is inserted between the first brackets 2202 on the upper and lower sides, is provided in a projecting manner at the end portion where the second door member 24 faces the first door member 22.

With the second bracket 2402 inserted between the first brackets 2202 on the upper and lower sides, and a shaft 28 inserted through the first bracket 2202 and the second bracket 2402, the first door member 22 and the second door member 24 are coupled with each other in a foldable manner.

A torsion coil spring 30 is provided from the first bracket 2202 to the second bracket 2402 on the upper and lower sides of the second bracket 2402, and thus the first door member 22 and the second door member 24 are always biased to be located at the closed position.

A light leakage cover not illustrated in the drawing is provided at the end portion where the first door member 22 and the second door member 24 face each other.

As illustrated in FIGS. 2 and 3, shafts 2204 are provided so as to be movable up and down at the upper and lower end surfaces of the end portion of the first door member 22 located opposite the second door member 24, and the shafts 2204 are inserted to holes not illustrated in the drawing of a mounting frame 32 of the front wall 1204 provided at the end portion of the entrance 1212 on the second side wall 1208B side, thus supporting the first door member 22 in a swingable manner around the shaft 2204.

Slide members 2404 are provided at the upper and lower end surfaces of the end portion of the second door member 24 located opposite the first door member 22, and the slide members 2404 are engaged with a guide rail not illustrated in the drawing of the mounting frame 32 of the front wall 1204, such that the slide member 2404 moves along the guide rail during the opening and closing of the entrance 1212.

The pair of shafts 2204 provided in the first door member 22 are always biased with a biasing member not illustrated in the drawing in the insertion direction to the holes of the mounting frame 32.

Further, a pin for detaching operation not illustrated in the drawing that can move the pair of shafts 2204 to the direction opposite to the biasing direction is provided in the pair of shafts 2204 in an operable manner from the outside of the lavatory 1002.

Thus, even when the user of the lavatory 1002 collapses due to poor health or the like inside the lavatory 1002 and the user's body interferes with the door 20 located at the closed position, the user can be rescued by operating the above-described operating pin to detach the pair of shafts 2204 from the holes of the mounting frame 32 and by detaching the slide member 2404 of the second door member 24 from the guide rail so as to detach the first door member 22 and the second door member 24 from the mounting frame 32 of the front wall 1204 from the outside of the lavatory 1002 and open the entrance 1212 of the lavatory 1002.

The reference numeral 2002 in FIG. 2 represents an indicator of pushing the first door member 22 by hand when opening the door 20 from the outside of the lavatory 1002, and the reference numeral 2004 in FIG. 3 represents a knob for grabbing and pulling the door 20 by hand when opening the door 20 from the inside of the lavatory 1002.

A damper not illustrated in the drawing is provided that reduces the impact of closing the entrance 1212 by slowing down the movement when the first door member 22 and the second door member 24 shift from the folded state to the unfolded state, i.e., when the door 20 moves from the open position to the closed position.

A lock mechanism not illustrated in the drawing is provided across the second door member 24 moved to the closed position and the front wall 1204 for the purpose of preventing the door 20 from being opened from the outside when the user is inside the lavatory 1002.

The various publicly known structures may be employed for such a coupling structure and attachment structure of the first door member 22 and the second door member 24, and the present invention is also naturally applicable to a case where the door 20 is composed of a single openable and closable door member.

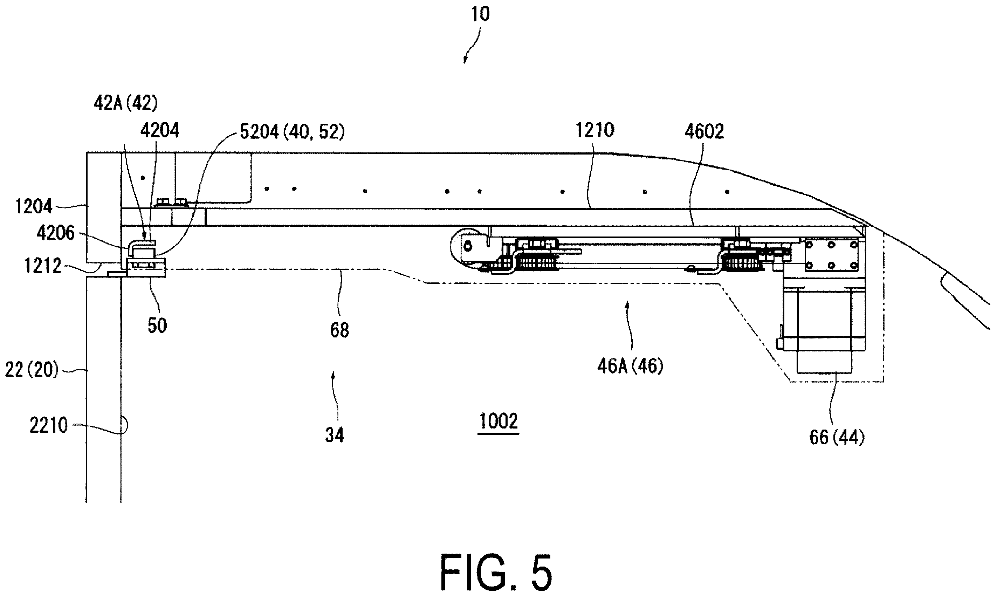

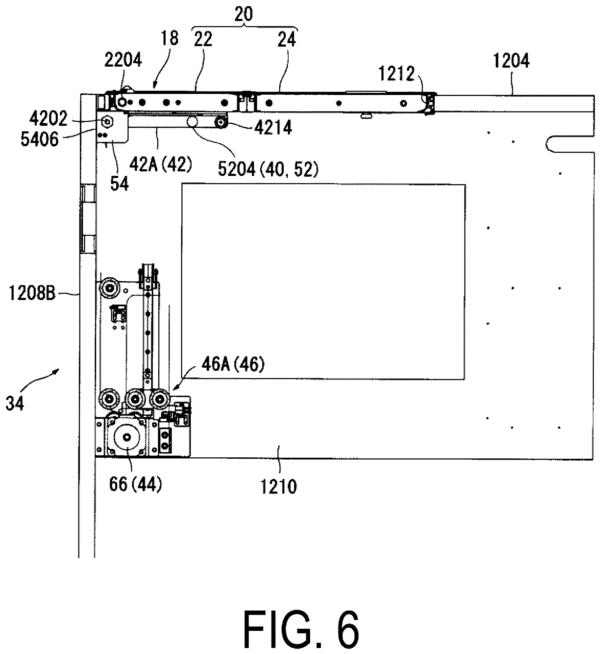

As illustrated in FIGS. 5 and 6, the door opening and closing mechanism 18 is provided with a powered door opening mechanism 34 that moves the door 20 from the closed position to the open position.

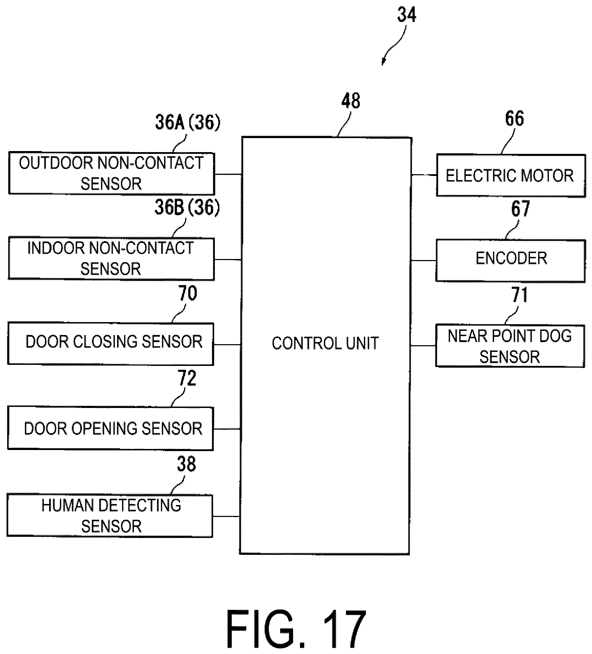

The powered door opening mechanism 34 includes a non-contact sensor 36 and a human detecting sensor 38 illustrated in FIG. 17, an engaged member 40, an engaging member 42, an actuator 44, and a power transmission mechanism 46 illustrated in FIGS. 11 and 12, and a control unit 48 illustrated in FIG. 17.

As illustrated in FIGS. 2 and 3, the non-contact sensor 36 is a sensor that detects a part of the human body such as a hand, i.e., a sensor that detects in a non-contact manner operation of a person holding a hand over the sensor.

As the non-contact sensor 36, various publicly known sensors such as an infrared ray sensor can be used.

The non-contact sensor 36 is provided outside and inside the lavatory 1002 such that the user of the lavatory 1002 can enter and leave the lavatory 1002 without touching the door 20.

The non-contact sensor 36 is provided at a height where the hand can be easily held at a portion in the front wall 1204 on a lateral side of the second door member 24 outside and inside the lavatory 1002.

In the following description, the non-contact sensor 36 provided outside the lavatory 1002 is referred to as an outdoor non-contact sensor 36A, and the non-contact sensor 36 provided inside the lavatory 1002 is referred to as an indoor non-contact sensor 36B.

The time taken for the outdoor non-contact sensor 36A and the indoor non-contact sensor 36B to detect operation of a person holding a hand over the outdoor non-contact sensor 36A and the indoor non-contact sensor 36B is, for example, about 1.5 seconds.

The human detecting sensor 38 is a sensor that detects a person inside the lavatory 1002 in a non-contact manner and is provided on a wall surface or the ceiling wall 1210 facing the inside of the lavatory 1002.

As the human detecting sensor 38, various publicly known sensors such as an infrared ray sensor may be used.

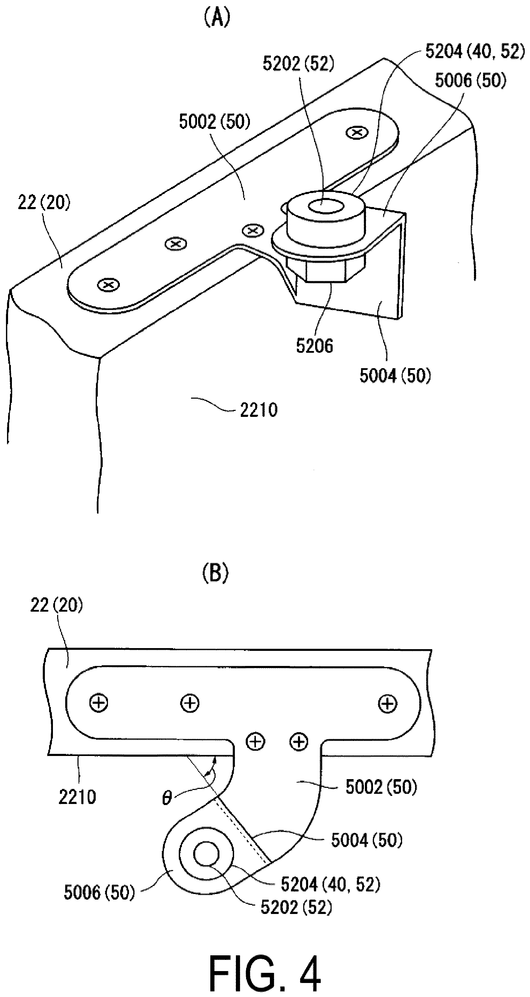

As illustrated in FIGS. 3 and 4, the engaged member 40 is provided at the upper end of the door 20 and is disposed at a location on the upper side of the door 20 and on the inner surface side of the door 20 located inside the lavatory 1002.

In the present embodiment, the engaged member 40 is composed of a roller 5204 supported by a bracket 50.

As illustrated in FIG. 4, the bracket 50 is attached to the upper end surface of the first door member 22 in a middle portion in the width direction.

The bracket 50 is composed of a sheet metal, and includes a base plate part 5002 attached with a screw to the upper end surface of the first door member 22 and protruded more to the inner side of the lavatory 1002 than an inner surface 2210 of the first door member 22, an upright plate part 5004 protruded from the tip of the base plate part 5002 more to the upper side than the first door member 22, and a mounting plate part 5006 horizontally bent from the upper end of the upright plate part 5004.

A cam follower 52 is attached to the mounting plate part 5006.

The cam follower 52 includes a support shaft 5202 and the roller 5204 rotatably supported by the support shaft 5202. The support shaft 5202 is inserted to a hole not illustrated in the drawing of the mounting plate part 5006, and the support shaft 5202 is threadedly engaged with a nut 5206 at the bottom surface of the mounting plate part 5006, and thus, the roller 5204 is rotatably disposed on the mounting plate part 5006.

As illustrated in FIG. 11, the roller 5204 is disposed at a location more on the inner side of the lavatory 1002 than the inner surface 2210 of the first door member 22 and more on the upper side than the first door member 22 as illustrated in FIG. 5.

An engaged plate part protruded to the upper side from the mounting plate part 5006 of the bracket 50 may be provided so as to make up the engaged member 40 with the engaged plate part, but the roller 5204 composed of the engaged member 40 is advantageous in smoothing the engagement with the engaging member 42 described later.

As illustrated in FIG. 5, the engaging member 42, provided inside the lavatory 1002 at a location more on the upper side than the door 20, has a shape that opens in the direction away from the first door member 22 and is engageable with the roller 5204 from the first door member 22 side from the closed position of the door 20 to the open position of the door 20.

The engaging member 42 is provided in the above-described manner, and therefore when the door 20 is manually opened, the roller 5204 provided at the first door member 22 to move together with the first door member 22 moves in the direction away from the entrance 1212 without interfering with the engaging member 42, and thus, the operation of manually moving the door 20 from the closed position to the open position is smoothly performed even with the powered door opening mechanism 34.

As illustrated in FIGS. 6 to 8, in the present embodiment, the engaging member 42 is composed of an arm 42A that is swingable in the direction toward and away from the entrance 1212 in the horizontal direction with an arm support shaft 4202, the axial center of which is aligned with the up-down direction, as a fulcrum.

As illustrated in FIG. 6, the arm 42A has substantially the same length as the width of the first door member 22, and the base end, which is one end portion of the arm 42A in the longitudinal direction, is swingably supported at the ceiling wall 1210 through the arm support shaft 4202. The arm support shaft 4202 is disposed at a location relatively closer to a support shaft 2204 of the first door member 22 and relatively closer to the second side wall 1208B.

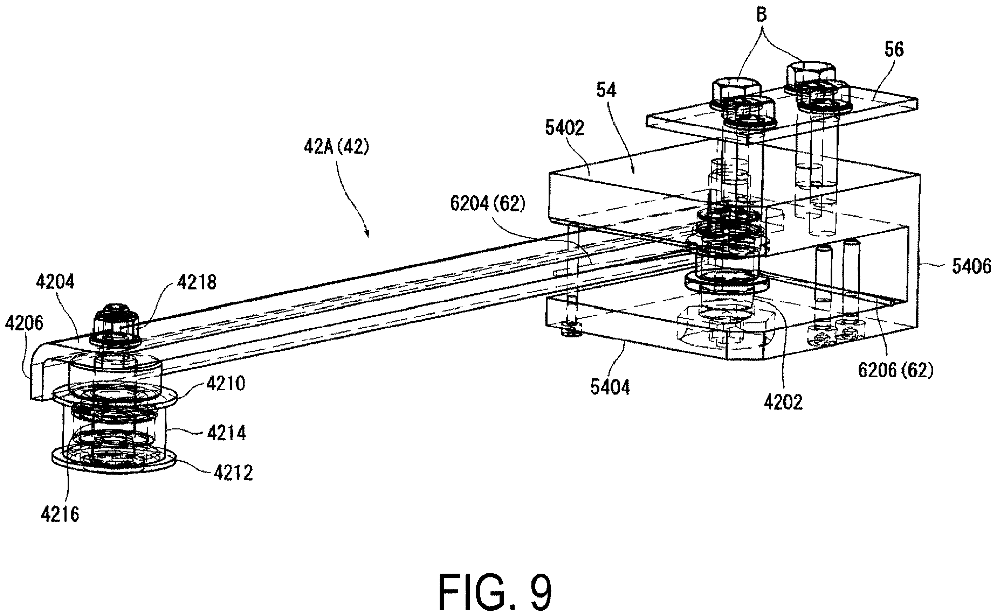

The arm 42A is composed of a sheet metal, and includes a body plate part 4204 having a uniform width and extending in parallel with the floor board 1202, and a bent plate part 4206 bent downward from one end of the body plate part 4204 in the width direction and extended along the body plate part 4204 as illustrated in FIGS. 5 and 9.

At the closed position of the door 20, the arm 42A is set to the initial position where it extends substantially parallel to the first door member 22 as illustrated in FIGS. 6 and 11, whereas at the open position of the door 20, the arm 42A is set to the open position where it extends in parallel with the first door member 22 as illustrated in FIG. 12.

As illustrated in FIG. 5, at the initial position of the arm 42A, the bent plate part 4206 is disposed between the inner surface 2210 of the first door member 22 and the roller 5204 in plan view, and in the present example, the bent plate part 4206 is disposed in contact with the roller 5204 from the first door member 22 side, or disposed at a position near the roller 5204.

As illustrated in FIGS. 6, 7(A) and 9, a roller 4214 sandwiched by a first collar 4210 and a second collar 4212 is rotatably provided through a support shaft 4216 and a nut 4218 at the tip of the bottom surface of the body plate part 4204 that is the other end portion of the arm 42A in the longitudinal direction.

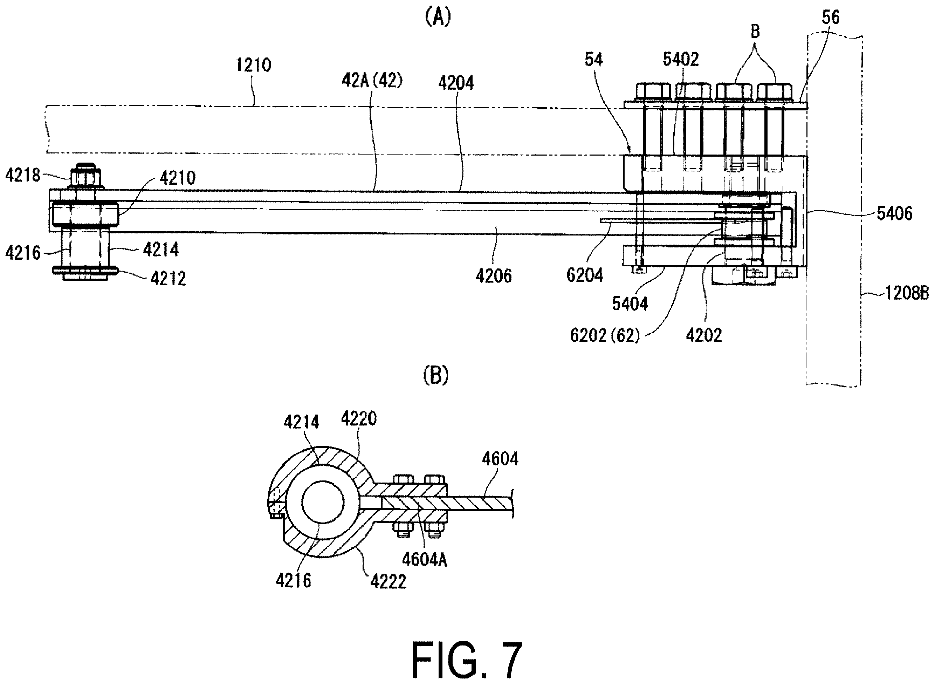

As illustrated in FIG. 7(B), one end portion, in the longitudinal direction, of a belt 4604 making up a belt and pulley mechanism 46A described later is attached to the roller 4214 with a pair of mounting pieces 4220 and 4222, and thus one end portion of the belt 4604 in the longitudinal direction is rotatably attached to the end of the arm 42A through the roller 4214.

As illustrated in FIG. 7(A), the arm support shaft 4202 is supported through an arm bracket 54, and the arm bracket 54 is attached to the ceiling wall 1210 through a pressing plate 56 and a plurality of bolts B.

The arm bracket 54 is made of metal and includes an upper plate part 5402 and a lower plate part 5404 facing each other, and a side plate part 5406 coupling the upper plate part 5402 and the lower plate part 5404. It is optional, for example, to provide the arm bracket 54 integrally with a support frame 4602 described later.

The ceiling wall 1210 is sandwiched by the pressing plate 56 and the upper plate part 5402 with the plurality of bolts B, such that the arm bracket 54 is attached to the ceiling wall 1210, and that the side plate part 5406 is in contact with the second side wall 1208B as illustrated in FIGS. 6 and 7. Thus, the arm 42A is swingably supported by the ceiling wall 1210 through the arm support shaft 4202 and the arm bracket 54.

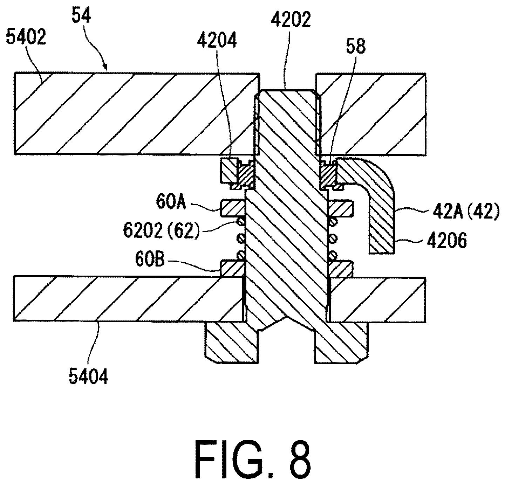

As illustrated in FIG. 8, the arm support shaft 4202 is composed of a square hole bolt, and is inserted to the bolt insertion hole of the lower plate part 5404 from the lower side of the lower plate part 5404 such that its tip male screw is coupled with the female screw of the upper plate part 5402, and that the arm support shaft 4202 is attached to the arm bracket 54.

The base end of the body plate part 4204 of the arm 42A in the longitudinal direction is rotatably supported by the arm support shaft 4202 through a bearing 58 at a portion of the arm support shaft 4202 relatively closer to the upper plate part 5402 between the upper plate part 5402 and the lower plate part 5404.

A coil part 6202 of a torsion coil spring 62 is wound around a portion of the arm support shaft 4202 more on the lower side than the bearing 58, through upper and lower washers 60A and 60B.

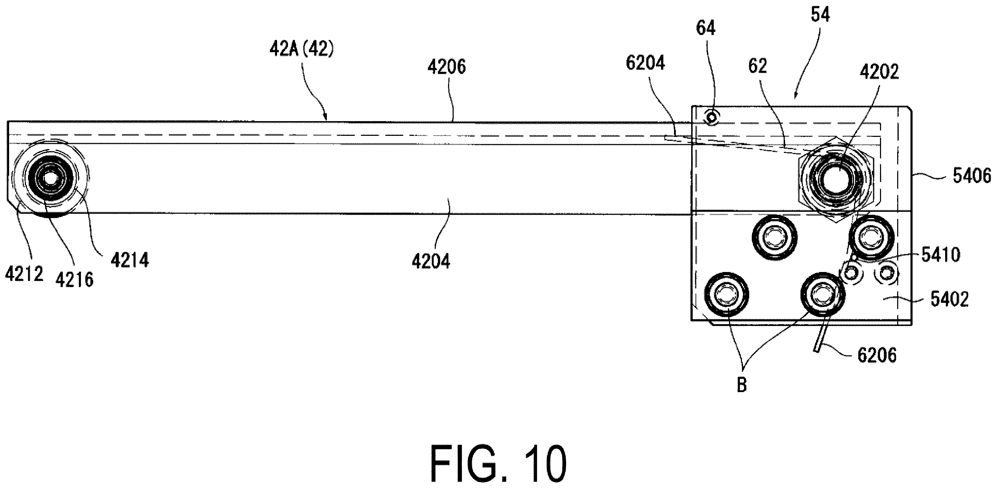

Of a pair of leg parts 6204 and 6206 protruded from both ends of the coil part 6202, the leg part 6204 is in contact with the bent plate part 4206 as illustrated in FIG. 7, whereas the other leg part 6206 is in contact with a pin 5410 provided in the lower plate part 5404 as illustrated in FIG. 10 so as to bias the arm 42A such that the arm 42A is always located at the initial position.

The reference numeral 64 in FIG. 10 represents an initial position stopper that is provided in the lower plate part 5404 of the bracket 50 to set the initial position of the arm 42A by making contact with the bent plate part 4206.

Thus, when the arm 42A is swung by the powered door opening mechanism 34 from the closed position to the open position at the closed position of the door 20, the bent plate part 4206 swings the first door member 22 through the roller 5204 and the door 20 is set to the open position illustrated in FIG. 12.

When the open position of the arm 42A is released, the arm 42A and the first door member 22 swing with the biasing force of the torsion coil spring 30 provided in the door 20 and the torsion coil spring 62 wound around the arm support shaft 4202 such that the arm 42A returns to the initial position and that the door 20 returns to the closed position as illustrated in FIG. 11.

In the present embodiment as illustrated in FIGS. 5, 6, and 11 to 16, the actuator 44 is an electric motor 66 (stepper motor), and the power transmission mechanism 46 includes the belt and pulley mechanism 46A.

In FIGS. 5, 6, 7(A), 14, 15 and 16, the belt 4604 is omitted for the sake of clear illustration of the belt and pulley mechanism 46A.

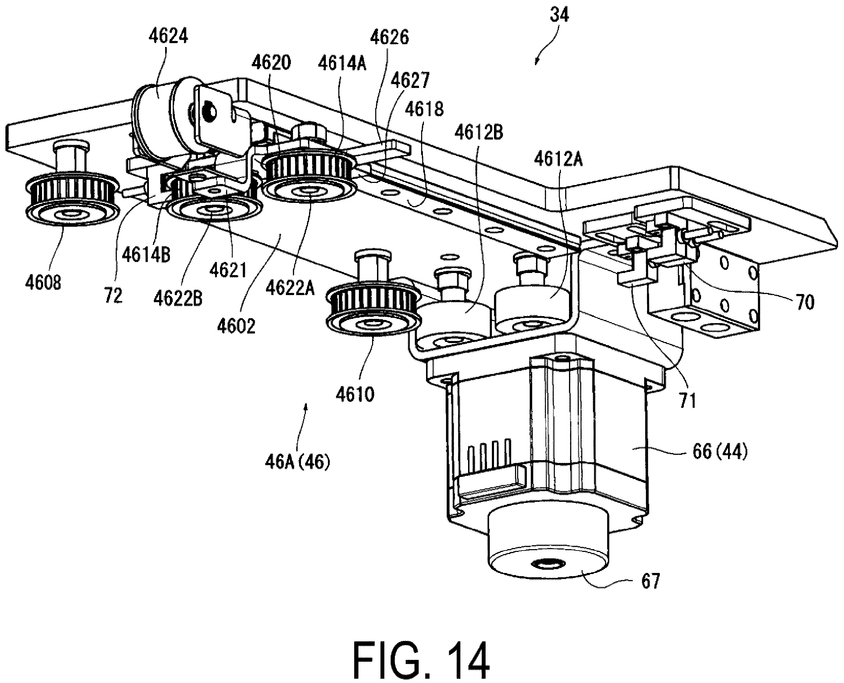

The belt and pulley mechanism 46A is provided inside the lavatory 1002 at a location more on the upper side than the door 20, and the belt and pulley mechanism 46A and the electric motor 66 are disposed on the side relatively closer to the ceiling wall 1210 as illustrated in FIGS. 5 and 6 and attached to the ceiling wall 1210 through the single support frame 4602 illustrated in FIG. 14.

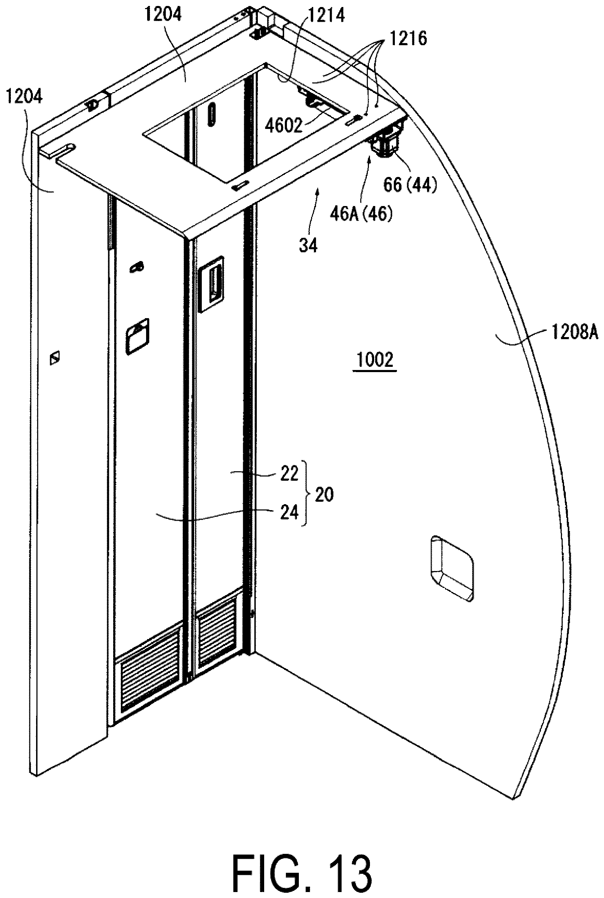

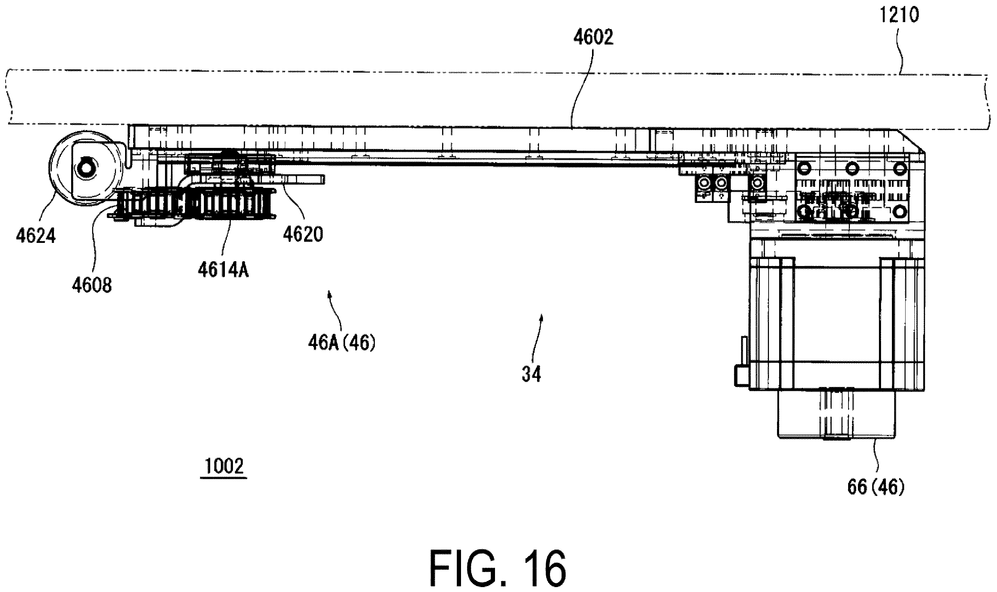

The support frame 4602 is composed of a metal plate and attached to the bottom surface of the ceiling wall 1210 at a position relatively closer to the second side wall 1208B as illustrated in FIGS. 13 and 16, and the support frame 4602 has an elongated shape in the direction connecting the front wall 1204 and the rear wall 1206, i.e., the front-rear direction of the lavatory 1002.

The reference numeral 1214 in FIG. 13 represents an opening provided in the ceiling wall 1210 and configured to dispose a lighting fixture, and the reference numeral 1216 represents an end portion of a bolt that couples the support frame 4602 and the ceiling wall 1210.

As illustrated in FIGS. 5 and 6, the electric motor 66 is provided at a location relatively closer to the second side wall 1208B at the end portion of the support frame 4602 on the rear wall 1206 side in the longitudinal direction.

As illustrated in FIGS. 11, 12, 14 and 15, the belt and pulley mechanism 46A includes the belt 4604, a toothed driving pulley 4606, a toothed first guide pulley 4608, a toothed second guide pulley 4610, a pair of rollers 4612A and 4612B, and a pair of toothed moving pulleys 4614A and 4614B.

The axial centers of the toothed driving pulley 4606, the toothed first guide pulley 4608, the toothed second guide pulley 4610, the pair of rollers 4612A and 4612B, and the pair of toothed moving pulleys 4614A and 4614B are aligned with the up-down direction, i.e., extended in the up-down direction, thus achieving reduction in size of the belt and pulley mechanism 46A in the up-down direction, i.e., reduction in size of the power transmission mechanism 46 in the up-down direction.

A toothless belt as the belt 4604 and a toothless pulley as the pulley may be used, but for the purpose of more accurately swing the arm 42A, the present embodiment uses a toothed belt provided with teeth as the belt 4604, and uses the toothed driving pulley 4606, the toothed first guide pulley 4608, the toothed second guide pulley 4610, and the pair of toothed moving pulleys 4614A and 4614B provided with teeth as the pulleys.

One end portion 4604A of the belt 4604 in the longitudinal direction is rotatably attached at the end of the arm 42A in the longitudinal direction through the pair of mounting pieces 4220 and 4222 as described above with reference to FIG. 7(B).

As illustrated in FIGS. 11, 12, and 15, the other end portion 4604B of the belt 4604 in the longitudinal direction is sandwiched and fixed by a pair of mounting pieces 4616A and 4616B on the support frame 4602.

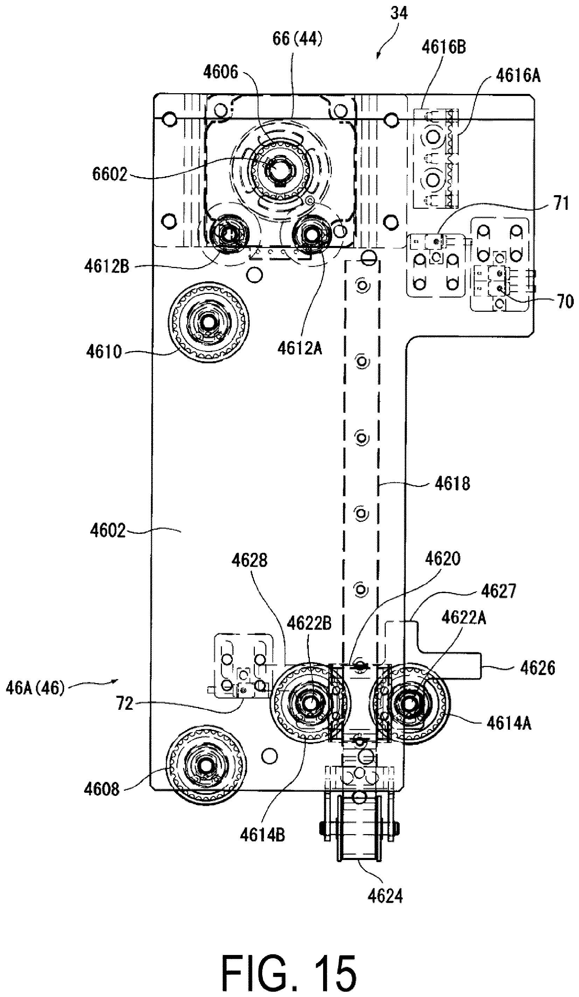

As illustrated in FIG. 15, the toothed driving pulley 4606 is attached to an output shaft 6602 of the electric motor 66, and the output shaft 6602 extends in the up-down direction.

As illustrated in FIGS. 14 and 15, a rail 4618 linearly extending in the front-rear direction of the lavatory 1002 is attached to the support frame 4602, and a moving bracket 4620 is provided in a movable manner along the rail 4618.

The pair of toothed moving pulleys 4614A and 4614B is rotatably supported by shafts 4622A and 4622B attached to the moving bracket 4620, and thus the pair of toothed moving pulleys 4614A and 4614B can integrally move back and forth straight along the rail 4618.

In the present embodiment, the moving bracket 4620 can move back and forth straight between the rear end position where the pair of toothed moving pulleys 4614A and 4614B is farthest away from the entrance 1212 as illustrated in FIG. 11, and the front end position where the pair of toothed moving pulleys 4614A and 4614B is closest to the entrance 1212 as illustrated in FIGS. 12, 14, 15 and 16.

As illustrated in FIGS. 14 to 16, a constant load mainspring 4624 is provided at the end portion of the support frame 4602 relatively closer to the front wall 1204 in the longitudinal direction, and the end portion of the constant load mainspring 4624 is attached at a mounting piece 4621 of the moving bracket 4620 so as to bias the moving bracket 4620 such that the moving bracket 4620 is always located at the front end position, and, the constant load mainspring 4624 always applies a tensile force to the belt 4604 such that the belt 4604 does not deflect.

As illustrated in FIGS. 12 and 14, the toothed first guide pulley 4608 is disposed at a location in the support frame 4602 close to the second side wall 1208B, and close to the roller 4214 of the end of the arm 42A at the open position of the arm 42A.

The toothed second guide pulley 4610 is disposed at a location in the support frame 4602 close to the pair of rollers 4612A and 4612B, and close to the second side wall 1208B.

As illustrated in FIGS. 11 and 12, the belt 4604 the other end portion 4604B of which is sandwiched and fixed with the pair of mounting pieces 4616A and 4616B on the support frame 4602 is hung at the pair of toothed moving pulleys 4614A and 4614B, then wound halfway or more around the toothed driving pulley 4606 through the pair of rollers 4612A and 4612B, and then hung at the toothed second guide pulley 4610 and the toothed first guide pulley 4608, such that one end portion 4604A of the belt 46 is attached at the end of the arm 42A through the pair of mounting pieces 4220 and 4222 as illustrated in FIG. 7(B).

The power transmission mechanism 46 including the belt and pulley mechanism 46A and the actuator 44 composed of the electric motor 66 are attached to the ceiling wall 1210 relatively closer to the second side wall 1208B through the support frame 4602, and the power transmission mechanism 46 and the actuator 44 are disposed on the side relatively closer to the second side wall 1208B, and, the powered door opening mechanism 34 except for the electric motor 66 is disposed at a location on the upper side of the door 20 as illustrated in FIG. 5.

As illustrated in FIG. 11, at the closed position of the door 20, the arm 42A is set to the initial position, and the pair of toothed moving pulleys 4614A and 4614B is located at the rear end position.

When the electric motor 66 is rotated forward at the closed position of the door 20, the belt 4604 attached at the end of the arm 42A is pulled to the direction of the rear wall 1206, which is the direction away from the entrance 1212 along with the forward rotation of the toothed driving pulley 4606, and the arm 42A moves from the initial position to the open position.

Then, when the pair of toothed moving pulleys 4614A and 4614B move from the rear end position to the front end position with the biasing force of the constant load mainspring 4624, the belt 4604 does not deflect between the toothed driving pulley 4606 and the other end portion 4604B of the belt 4604 the other end portion 4604B of which is fixed by the pair of mounting pieces 4220 and 4222 on the support frame 4602, and the arm 42A is shifted from the initial position to the open position illustrated in FIG. 12 in the state where a tensile force is always applied to the belt 4604 between the other end portion 4604B of the belt 4604 and the toothed driving pulley 4606, thus setting the door 20 to the open position.

In this manner, the belt 4604 attached at the end of the arm 42A is pulled to the direction of the rear wall 1206 with the stroke more than double the movement stroke of the pair of toothed moving pulleys 4614A and 4614B, and the door 20 is shifted from the closed position to the open position.

While the pair of toothed moving pulleys 4614A and 4614B is provided as the toothed moving pulley in the above-described embodiment, the number of toothed moving pulley may be one, or three or more.

As illustrated in FIG. 12, when the electric motor 66 is reversed at the open position of the door 20, the belt 4604 is fed to the arm 42A side along with the reverse rotation of the toothed driving pulley 4606.

In this case, the pair of toothed moving pulleys 4614A and 4614B moves from the front end position to the rear end position against the biasing force of the constant load mainspring 4624, and thus the belt 4604 does not deflect between the other end portion 4604B of the belt 4604 and the toothed driving pulley 4606.

On the other hand, the door 20 is biased by the torsion coil spring 30 provided in the door 20 to move to the closed position, and the arm 42A is biased by the torsion coil spring 62 provided in the arm 42A to return to the initial position.

However, if the feeding amount of the belt 4604 to the end of the arm 42A is small, the movement of the arm 42A to the initial position is constrained by the belt 4604.

This engages the roller 5204 making up the engaged member 40 with the bent plate part 4206 of the arm 42A making up the engaging member 42, and thus the movement of the door 20 to the closed position is constrained.

Specifically, since the movement of the arm 42A to the initial position and the movement of the door 20 to the closed position are constrained by the feeding amount of the belt 4604 to the end of the arm 42A, the door 20 swings in accordance with the feeding amount of the belt 4604 due to the reverse rotation of the toothed driving pulley 4606 against the biasing force of the torsion coil spring 30 provided in the door 20 and the torsion coil spring 62 provided in the arm 42A, and is thus noiselessly and quietly set to the closed position.

Thus, the belt 4604 is fed to the arm 42A with the stroke more than double the movement stroke of the pair of toothed moving pulleys 4614A and 4614B, and the door 20 is shifted from the open position to the closed position.

Specifically, with the stroke more than double the movement stroke of the pair of toothed moving pulleys 4614A and 4614B, the belt 4604 coupled with the arm 42A is pulled to the direction of the rear wall 1206 and fed to the direction of the entrance 1212, thus achieving the power transmission mechanism 46 with a compact structure that takes up little space in the front-rear direction of the lavatory 1002.

The door 20 is biased to move to the closed position with the biasing force of the torsion coil spring 30 provided in the door 20, and is provided with the damper not illustrated in the drawing that reduces the impact of closing the entrance 1212, and therefore, the operation of reversing the electric motor 66 at the open position of the door 20 may be omitted. In this case, it suffices to set the electric motor 66 to a free state where the output shaft 6602 is rotatable by stopping the supply of the driving signal from the control unit 48 to the electric motor 66, i.e., by stopping the energization to the electric motor 66, instead of reversing the electric motor 66.

It should be noted that reversing the electric motor 66 at the open position of the door 20 can move the door 20 from the open position to the closed position of the door 20 at the desired speed, which is advantageous in reducing the impact and noise of the door 20 forcefully moved to the closed position, and is therefore advantageous in providing a high-end look to the aircraft lavatory unit 10.

As illustrated in FIGS. 5 and 11, at a location relatively closer to the second side wall 1208B between the front wall 1204 and the rear wall 1206, a decorative panel 68 that covers from the lower side of the lavatory 1002 the upper portion of the bracket 50 and the roller 5204 making up the engaged member 40, the arm 42A making up the engaging member 42, the power transmission mechanism 46, and the electric motor 66 to hide the upper portion of the bracket 50, the roller 5204, the arm 42A, and the power transmission mechanism 46 is provided such that the user of the aircraft lavatory unit 10 is not able to visually recognize them, thus ensuring the aesthetics in the lavatory 1002.

The decorative panel 68, made of synthetic resin, is attached to the front wall 1204 and uprightly attached to the ceiling wall 1210 relatively closer to the rear wall 1206 in the front-rear direction of the lavatory 1002. The decorative panel 68 is attached to the second side wall 1208B on one side in the width direction of the lavatory 1002 and uprightly attached to the ceiling wall 1210 on the other side in the width direction of the lavatory 1002.

As illustrated in FIG. 11, the decorative panel 68 is provided with a long groove 6802 where the upper portion of the bracket 50 protrudes to the upper side of the lavatory 1002.

The long groove 6802 extends along the movement trajectory of the upright plate part 5004 of the bracket 50 that moves along with the movement of the first door member 22 between the closed position and the open position so as to allow for smooth movement of the bracket 50, i.e., smooth movement of the engaged member 40 (the roller 5204), thus achieving smooth swing of the arm 42A between the initial position and the open position. As illustrated in FIG. 4(B), the inclination angle θ of the upright plate part 5004 of the bracket 50 with respect to the first door member 22 is set such that the width of the long groove 6802 is minimized.

As illustrated in FIG. 15, a door stop detection piece 4626, a near point detection piece 4627 and a door open detection piece 4628 are provided in a projecting manner on both sides of the moving bracket 4620 in the arrangement direction of the pair of toothed moving pulleys 4614A and 4614B.

The support frame 4602 is provided with a door closing sensor 70, a near point dog sensor 71, and a door opening sensor 72.

The door closing sensor 70 is provided to detect the door stop detection piece 4626 when the arm 42A is set to the initial position and the pair of toothed moving pulleys 4614A and 4614B is located at the rear end position, i.e., at the closed position of the door 20.

The near point dog sensor 71 is provided to detect a fact that the electric motor 66 has returned to the position immediately before the origin position.

The origin position of the electric motor 66 corresponds to the state where the pair of toothed moving pulleys 4614A and 4614B is located at a location moved more to the slightly rear side than the rear end position.

The control unit 48 performs a control of stopping the electric motor 66 on the basis of the detection result of the near point dog sensor 71, and thus the electric motor 66 correctly returns to the origin position.

Further, the control of the rotation amount of the electric motor 66 is performed with this origin position as a reference.

As described later, whether the arm 42A is located at the open position and the door 20 has reached the open position is determined by the control unit 48 on the basis of the rotation amount from the origin position in the forward rotation of the electric motor 66. The rotation amount is detected by an encoder 67 described later.

The door opening sensor 72 is provided to detect abnormality that occurs in the period in which the electric motor 66 is rotated forward to move the door 20 to the open position.

Specifically, the door opening sensor 72 is provided to detect the door open detection piece 4628 when the electric motor 66 continues the forward rotation after the arm 42A is set to the open position due to the forward rotation of the electric motor 66, and the pair of toothed moving pulleys 4614A and 4614B reaches the limitation position beyond the front end position corresponding to the open position of the door 20.

When the door opening sensor 72 has detected the door open detection piece 4628, the control unit 48 determines that there is some abnormality and performs an abnormality process such as stopping the forward operation of the electric motor 66. Description of the detection operation of the door opening sensor 72 and the abnormality process associated with the detection operation will be omitted.

The door closing sensor 70, the near point dog sensor 71, and the door opening sensor 72 are composed of photointerrupters, for example.

As illustrated in FIG. 17, the control unit 48 controls the forward and reverse rotation, energization, and stop of energization of the electric motor 66 and the like, or more specifically, the rotation amount (rotation angle) and rotational speed of the electric motor 66 (stepper motor) on the basis of detection signals of the human detecting sensor 38, the outdoor non-contact sensor 36A, the indoor non-contact sensor 36B, the door closing sensor 70, and the near point dog sensor 71.

The electric motor 66 is provided with the encoder 67 that detects its rotation amount (rotation angle), generates a rotation amount detection signal, and supplies it to the control unit 48. The control unit 48 controls the electric motor 66 on the basis of the rotation detection signal supplied from the encoder 67.

Through the control of the electric motor 66 by the control unit 48, the movement of the arm 42A between the initial position and the open position is controlled, and thus the movement of the door 20 between the closed position and the open position is controlled.

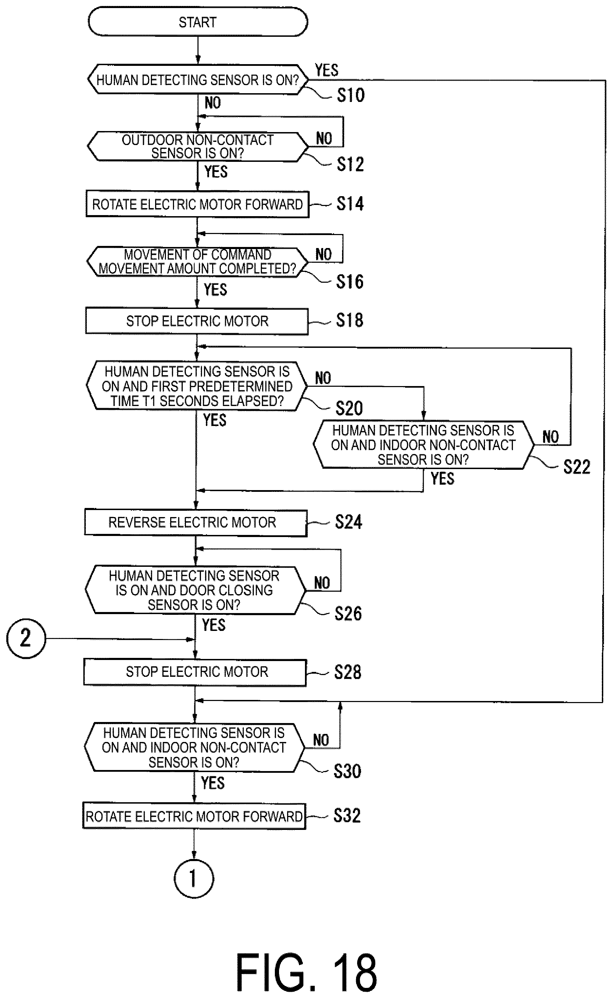

Next, operation of the powered door opening mechanism 34 of the present embodiment is described with reference to the flowcharts of FIGS. 18 to 20.

### Normal Operation

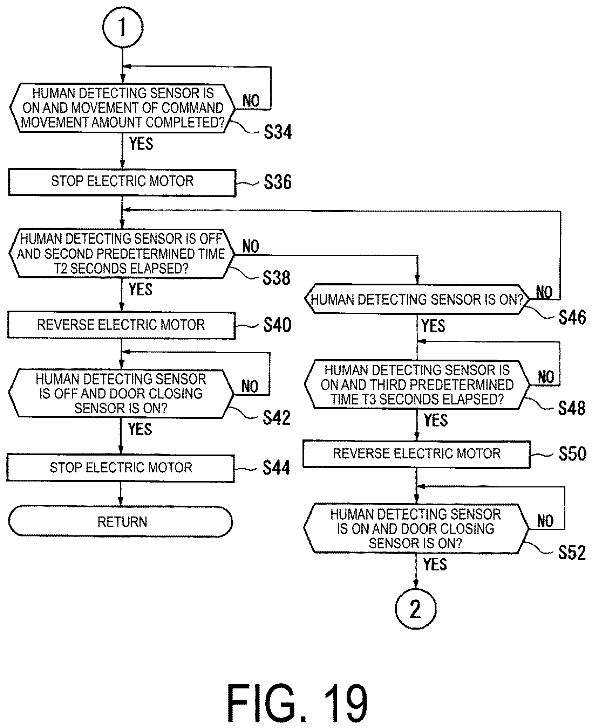

First, with reference to FIGS. 18 and 19, a normal operation in the case where the user uses the lavatory 1002 is described.

It is assumed that in the initial state, the inside of the lavatory 1002 is not used and the door 20 is located at the closed position.

The control unit 48 determines whether the detection signal of the human detecting sensor 38 is turned on (detecting a person), i.e., whether there is a person (user) inside the lavatory 1002 (step S10).

When step S10 is positive, the process is advanced to step S30 described later.

When step S10 is negative, the control unit 48 determines whether the detection signal of the outdoor non-contact sensor 36A is on (step S12).

The user of the lavatory 1002 turns on the outdoor non-contact sensor 36A by holding a hand over the outdoor non-contact sensor 36A to use the lavatory 1002.

When step S12 is positive, i.e., when the detection signal of the outdoor non-contact sensor 36A is on, the control unit 48 rotates the electric motor 66 forward, and thus the door 20 is moved to the open position through the power transmission mechanism 46 (step S14).

On the basis of the rotation amount detection signal supplied from the encoder 67, the control unit 48 determines whether the rotation amount of the electric motor 66 has reached a command movement amount enough to move the door 20 to the open position, i.e., whether the movement of the door 20 to the open position has been completed (step S16).

When step S16 is negative, the control unit 48 returns to step 16 and continues the forward rotation of the electric motor 66.

When step S16 is positive, the door 20 has moved to the open position, and therefore the control unit 48 keeps the door 20 at the open position by stopping the electric motor 66 (step S18).

Next, the control unit 48 determines whether detection of the human detecting sensor 38 is on and a first predetermined time T1 has elapsed after the door 20 has moved to the open position (step S20). The first predetermined time T1 is, for example, 9 seconds.

In the state where the door 20 has moved to the open position in this manner, the user enters the inside of the lavatory 1002.

Therefore, when the first predetermined time T1 has elapsed in the state where detection of the human detecting sensor 38 is on and the door 20 is located at the open position, the control unit 48 causes the electric motor 66 to move the door 20 from the open position to the closed position.

When step S20 is positive, the control unit 48 reverses the electric motor 66, and thus the door 20 is moved to the closed position through the power transmission mechanism 46 (step S24).

Specifically, when the user who has entered the inside of the lavatory 1002 does nothing and waits for the first predetermined time T1, the door 20 is moved to the closed position.

When step S20 is negative, it is determined whether detection of the human detecting sensor 38 is turned on and detection of the indoor non-contact sensor 36B is on (step S22).

When step S22 is negative, the process is returned to step S20.

When step S22 is positive, the control unit 48 reverses the electric motor 66, and thus the door 20 is moved to the closed position through the power transmission mechanism 46 (step S24).

In other words, when detection of the human detecting sensor 38 is turned on, the door 20 is located at the open position, and the indoor non-contact sensor 36B detects a person, the control unit 48 causes the actuator 44 (the electric motor 66) to move the door 20 from the open position to the closed position.

Specifically, when the user who has entered the inside of the lavatory 1002 desires to immediately move the door 20 from the open position to the closed position, the door 20 is moved to the closed position by holding a hand over the indoor non-contact sensor 36B.

Next, the control unit 48 determines whether detection of the human detecting sensor 38 is on and detection of the door closing sensor 70 is on (step S26).

When step S26 is negative, the control unit 48 repeats step 26 to move the door 20 to the closed position.

When step S26 is positive, the door 20 has moved to the closed position, and therefore the control unit 48 stops the electric motor 66 and keeps the door 20 at the closed position (step S28).

By keeping the door 20 at the closed position in this manner, the state where the user can use the lavatory 1002 is set.

Next, the control unit 48 determines whether detection of the human detecting sensor 38 is on and detection of the indoor non-contact sensor 36B is on (step S30).

When step S30 is negative, the user is using the lavatory 1002, and therefore the control unit 48 returns to step S30 to keep the door 20 at the closed position.

Thus, when detection of the human detecting sensor 38 is turned on, the control unit 48 prohibits the actuator 44 (the electric motor 66) from moving the door 20 from the closed position to the open position with regardless of whether the outdoor non-contact sensor 36A detects a person unless detection of the indoor non-contact sensor 36B is turned on.

The door 20 is kept at the closed position in this manner and the movement of the door 20 to the open position is prohibited, and thus, the state where the user can use the lavatory 1002 is maintained.

On the other hand, when the user who has finished using the lavatory 1002 leaves the lavatory 1002, the user holds a hand over the indoor non-contact sensor 36B.

That is, when step S30 is positive, the control unit 48 rotates the electric motor 66 forward to move the door 20 to the open position (step S32).

Thus, when detection of the human detecting sensor 38 is turned on, detection of the door closing sensor 70 is turned on (determined in step S26), and the indoor non-contact sensor 36B detects a person, the control unit 48 causes the actuator 44 (the electric motor 66) to move the door 20 from the closed position to the open position.

Next, the control unit 48 determines whether detection of the human detecting sensor 38 is on and the movement of the electric motor 66 by a predetermined movement amount has been completed (i.e., the door 20 is located at the open position) (step S34).

When step S34 is negative, step S34 is repeated to move the door 20 to the open position.

When step S34 is positive, the door 20 has been moved to the open position, and therefore the electric motor 66 is stopped to keep the door 20 at the open position (step S36).

In this state, the user inside the lavatory 1002 leaves the lavatory 1002.

Next, the control unit 48 determines whether a second predetermined time T2 has elapsed in the state where detection of the human detecting sensor 38 is turned off (detecting nothing) (step S38). The second predetermined time T2 is, for example, 9 seconds.

When step 38 is positive, the control unit 48 reverses the electric motor 66 to move the door 20 to the closed position (step S40).

Next, the control unit 48 determines whether detection of the human detecting sensor 38 is off and detection of the door closing sensor 70 is on (step S42).

When step S42 is negative, step S42 is repeated to move the door 20 to the closed position.

When step S42 is positive, the door 20 has moved to the closed position in the state where the user is not present inside the lavatory 1002, and therefore the control unit 48 stops the electric motor 66 to keep the door 20 at the closed position (step S44), and returns to step S10 to reset to the initial state.

In other words, when detection of the human detecting sensor 38 is off and the second predetermined time T2 has elapsed in the state where the door 20 is located at the open position, the control unit 48 causes the actuator 44 (the electric motor 66) to move the door 20 from the open position to the closed position (steps S34, S36, S38, S40, S42, and S44).

On the other hand, when step 38 is negative, it is determined whether detection of the human detecting sensor 38 is on (step S46). Specifically, it is determined whether another user has entered the inside of the lavatory 1002.

When step S46 is negative, the process is returned to step S38, and it is determined whether the second predetermined time T2 has elapsed.

When step S46 is positive, it is determined whether detection of the human detecting sensor 38 is on, and a third predetermined time T3 has elapsed (step S48). The third predetermined time T3 is, for example, 9 seconds. When step S48 is negative, step S48 is repeated.

When step S48 is negative, step S48 is repeated.

When step S48 is positive, another user is in the lavatory 1002, and therefore the control unit 48 reverses the electric motor 66 to move the door 20 to the closed position after the elapse of the third predetermined time T3 (step S5).

Next, the control unit 48 determines whether detection of the human detecting sensor 38 is on and detection of the door closing sensor 70 is on (step S52).

When step S52 is negative, step S52 is repeated to move the door 20 to the closed position.

When step S52 is positive, another user is present in the lavatory 1002, and the control unit 48 returns to step S28 and repeats the same processes.

In other words, when the third predetermined time T3 has elapsed in the state where the door 20 is located at the open position and detection of the human detecting sensor 38 is on, the control unit 48 causes the actuator 44 (the electric motor 66) to move the door 20 from the open position to the closed position (steps S34, S36, S38, S46, S48, S50, and S52).

By repeating such a series of operations, the user uses the lavatory 1002.

### Operation for Case where Door 20 Interferes with Person or Object

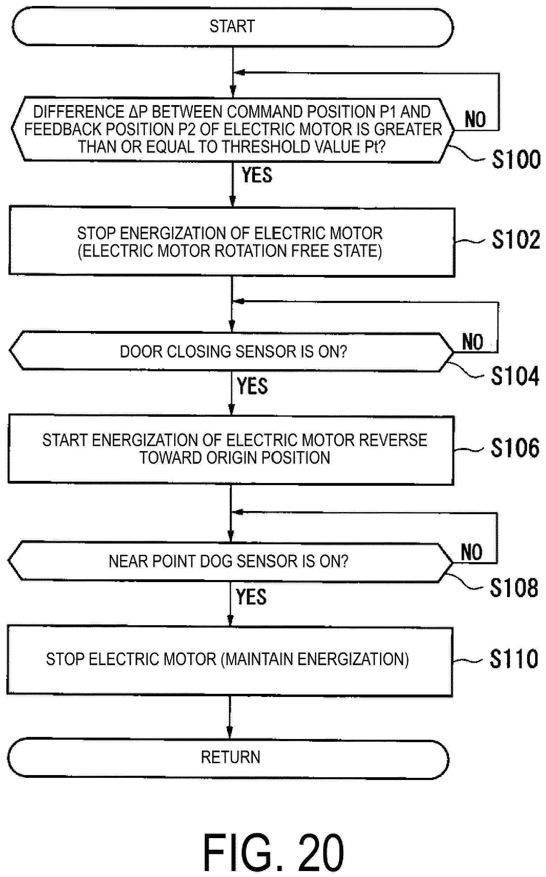

With reference to FIG. 20, the following describes operation of protecting a person or object from the driving force of the actuator 44 (the electric motor 66) in a case where the door 20 during movement interferes with the person or object.

The operation illustrated in FIG. 20 described below is repeatedly executed at all times.

In the present embodiment, the following process is applied to a case where the door 20 interferes with a person or object during movement of the door 20 from the closed position to the open position, but not applied to a case where the door 20 interferes with a person or object during movement of the door 20 from the closed position to the open position.

The reason for this is that in the present embodiment, when the door 20 moves from the closed position to the open position, the driving force of the electric motor 66 is acting on the door 20 through the power transmission mechanism 46, and therefore there is a high need to protect the person or object from the driving force of the electric motor 66.

On the other hand, when the door 20 moves from the open position to the closed position, the driving force of the electric motor 66 itself is not acting on the door 20, and only a relatively weak biasing force of the torsion coil spring 30 enough to bias the door 20 toward the closed position is applied to a person or object from the door 20.

The control unit 48 monitors a difference ΔP=P1-P2 between a command position P1 that is a rotation amount commanded to the electric motor 66 when the door 20 moves from the closed position to the open position, and a feedback position P2 that is the actual rotation amount detected by the encoder 67, and determines whether the difference ΔP is a predetermined threshold value Pt or greater (step S100). The threshold value Pt converted to the movement amount of the pair of toothed moving pulleys 4614A and 4614B is, for example, 5 mm.

When the difference ΔP is the threshold value Pt or greater, the movement of the door 20 is abnormal, and it can be determined that the door 20 during movement has interfered with a person or object.

When step S100 is negative, the following processes are skipped.

When step S 100 is positive, the control unit 48 stops the energization to the electric motor 66 (step S102).

In this manner, the electric motor 66 becomes rotation free, and the driving force of the electric motor 66 that has been applied from the electric motor 66 to the door 20 through the power transmission mechanism 46 becomes zero, i.e., the electric motor 66 becomes rotation free.

In this state, the door 20 is moved to the closed position with the biasing force of the torsion coil spring 30 of the door 20, and the arm 42A returns to the initial position with the biasing force of the torsion coil spring 62.

Alternatively, when the door 20 interferes, the person moves the door 20 to the closed position by hand, and the arm 42A returns to the initial position with the biasing force of the torsion coil spring 62.

At this time, the belt 4604 is fed to the direction of the entrance 1212 by the arm 42A returning to the initial position, and the pair of toothed moving pulleys 4614A and 4614B moves to the rear end position against the biasing force of the constant load mainspring 4624.

When the belt 4604 is fed, the door stop detection piece 4626 is moved to a position where it can be detected by the door closing sensor 70.

That is, the control unit 48 determines whether detection of the door closing sensor 70 is on (step S104). When step S104 is negative, step S104 is repeated.

When step S104 is positive, the control unit 48 starts the energization to the electric motor 66 (rotation command) and provides the electric motor 66 with a command to return to the origin position (step S106). This causes the electric motor 66 to reverse.

Next, the control unit 48 determines whether detection of the near point dog sensor 71 is on (step S108).

When step S108 is negative, step S108 is repeated.

When step S108 is positive, the control unit 48 performs the control of stopping the electric motor 66 by stopping the reverse rotation of the electric motor 66. This causes the electric motor 66 to return to the origin position (step S110). In this state, while the electric motor 66 is stopped, the energization state is maintained and the electric motor 66 is not in the rotation free state.

Thus, the series of operations is terminated, and the state is returned to the initial state (in step S10 in FIG. 18).

In this manner, in the case where a person or object interferes with the door 20 and the movement of the door 20 becomes abnormal during the movement of the door 20 from the closed position to the open position, the control unit 48 cuts off the energization to the electric motor 66 to set the driving force applied from the electric motor 66 to the door 20 to zero, and thus the person or object is protected from the door 20.

In the present embodiment, the determination by the control unit 48 whether the movement of the door 20 is abnormal during the movement of the door 20 from the closed position to the open position is performed based on the difference ΔP=P1-P2 between the command position P1 and the feedback position P2 in the electric motor 66.

However, the control unit 48 may determine the overload status of the electric motor 66 based on whether a load current I_{L} of the electric motor 66 exceeds a predetermined threshold value I_{TH} and determine that the movement of the door 20 is abnormal when the overload status has occurred.

Alternatively, in the case where the electric motor 66 is composed of a stepper motor, the control unit 48 may monitor whether the stepper motor is synchronized normally with the pulse signal so as to determine that the electric motor 66 is in the overload status when the stepper motor cannot be normally synchronized with the pulse signal, i.e., when a state of loss of synchronization occurs, and determine that the movement of the door 20 is abnormal when the overload status has occurred.

Next, special cases other than the case where the lavatory 1002 is used by the user is described.

Case Where Door 20 is Kept in Open Position for Maintenance, Cleaning, Etc.

In this case, after moving the door 20 to the open position by holding a hand over the outdoor non-contact sensor 36A, the door 20 is fixed at the open position with a latch or the like not illustrated in the drawing provided at the entrance 1212.

At this time, the operations of steps S10 to S30 in FIG. 18 are executed, and thus the control unit 48 reverses the electric motor 66 after the elapse of the first predetermined time T1 to move the door 20 toward the closed position.

At this time, since the door 20 is fixed at the open position, the arm 42A moved to the open position is not engaged with the roller 5204. Thus, along with the reverse rotation of the electric motor 66, the belt 4604 is fed to the direction of the entrance 1212, and the arm 42A moves from the open position to the initial position with the biasing force of the torsion coil spring 62 and is kept at the initial position. The control unit 48 executes step S30 to keep the state where the electric motor 66 is stopped.

Thus, the worker can perform the maintenance, cleaning and the like inside the lavatory 1002 with the door 20 fixed to the open position.

After the maintenance, cleaning and the like are completed, the door 20 is moved to the closed position with the biasing force of the torsion coil spring 30 by releasing the fixation of the door 20 with the latch, thus setting the state where the lavatory 1002 can be normally used thereafter.

More specifically, in the state where the door 20 is moved to the closed position with the biasing force of the torsion coil spring 30, the processes after step S30 of FIGS. 18 and 19 are executed such that the door 20 is moved to the open position, and then the worker leaves the lavatory 1002, and, the control unit 48 returns to the process of step S10, thus setting the state where the lavatory 1002 can be normally used.

The door 20 may be fixed to the open position with the latch after the door 20 is manually moved to the open position.

In that case, since the arm 42A is kept at the initial position with the biasing force of the torsion coil spring 62 from the beginning without being moved to the open position, the moving operation of the arm 42A from the open position to the initial position is unnecessary.

### Case of Manually Moving Door 20 to Open Position in Fault or Power Loss Condition

In this case, the control of the control unit 48 is not executed, but exactly as in the manual operation of the door 20 in the known lavatory 1002, the door 20 is manually moved from the closed position to the open position, and the movement of the door 20 from the open position to the closed position is achieved with the biasing force of the torsion coil spring 30 for the door 20.

### Case Where Functions of Electric Motor 66 and Control Unit 48 are Forcibly Switched to Disabled or Enabled in Maintenance

In this case, when operation of holding a hand over both the indoor and outdoor non-contact sensors, i.e., the outdoor non-contact sensor 36A and the indoor non-contact sensor 36B, is simultaneously continuously performed for a predetermined time with the door 20 manually set to the open position, the control unit 48 switches the functions of the electric motor 66 and the control unit 48 to the disabled or enabled state.

Disabling the function of the electric motor 66 is stopping the energization to the electric motor 66 and enabling the function of the electric motor 66 is starting the energization to the electric motor 66.

For example, the above-described predetermined time is set to 120 seconds in the case of switching the functions of the electric motor 66 and the control unit 48 from the enabled state to the disabled state, and the above-described predetermined time is set to 20 seconds in the case of switching the functions of the electric motor 66 and the control unit 48 from the disabled state to the enabled state.

By setting in this manner the time taken for the operation of holding a hand over each non-contact sensor to a longer time, such as 20 seconds to 120 seconds, than the above-described about 1.5 seconds for the opening and closing of the door 20, it is possible to prevent a situation where the functions of the electric motor 66 and the control unit 48 are erroneously switched to the disabled or enabled state by a wrong operation of a normal user (passenger).

Since it is necessary to switch the functions of the electric motor 66 and the control unit 48 from the disabled state to the enabled state, the functions of the outdoor non-contact sensor 36A and the indoor non-contact sensor 36B, and the operation of the control unit 48 for functioning each sensor are enabled at all times.

Thus, the functions of the electric motor 66 and the control unit 48 can be easily switched to the disabled state or enabled state by the simple operation of simultaneously holding a hand over both the outdoor non-contact sensor 36A and the indoor non-contact sensor 36B.

As described above, according to the present embodiment, in the case where the human detecting sensor 38 detects nothing, the control unit 48 causes the actuator 44 to move the door 20 from the closed position to the open position when detection of the outdoor non-contact sensor 36A that detects in a non-contact manner operation of a person holding a hand over the outdoor non-contact sensor 36A is turned on.

Thus, the user of the lavatory 1002 can open the door 20 by only holding a hand over the outdoor non-contact sensor 36A without touching the door 20 or the contact sensor, which is advantageous in preventing the transmission of novel coronavirus in the interior.

The outdoor non-contact sensor 36A does not detect the hand unless the user intentionally holds a hand over the outdoor non-contact sensor 36A, and thus, even when a person passes through the vicinity of the outdoor non-contact sensor 36A or when a crew stands and works in the vicinity of the outdoor non-contact sensor 36A, the outdoor non-contact sensor 36A does not perform the detection operation, which is advantageous in improving the user-friendliness of the lavatory 1002 by reducing the opening operation of the door 20 due to erroneous operation.

In the present embodiment, when the human detecting sensor 38 detects a person, the control unit 48 prohibits the movement of the door 20 from the closed position to the open position by the outdoor non-contact sensor 36A regardless of whether the outdoor non-contact sensor 36A detects a person.

Thus, in the case where there is a user inside the lavatory 1002, the erroneous operation of erroneously opening the door 20 can be reduced even when the user outside the lavatory 1002 holds a hand over the outdoor non-contact sensor 36A and the outdoor non-contact sensor 36A detects a person, which is advantageous in improving the user-friendliness of the lavatory 1002.

In the present embodiment, when the human detecting sensor 38 detects a person and the first predetermined time T1 has elapsed from the state where the door 20 is located at the open position, the control unit 48 causes the actuator 44 to move the door 20 from the open position to the closed position.

Thus, when the first predetermined time T1 has elapsed after the user has entered the lavatory, the door 20 automatically performs the closing operation, and therefore it is not necessary for the user to touch the door 20 or the contact sensor, which is naturally advantageous in preventing the transmission of novel coronavirus in the interior and also advantageous in improving the user-friendliness of the lavatory 1002 because the user does not need to perform special operations.

In the present embodiment, when the human detecting sensor 38 detects a person, the door 20 is located at the open position, and the indoor non-contact sensor 36B detects a person, the control unit 48 causes the actuator 44 to move the door 20 from the open position to the closed position.

Thus, the user can close the door 20 by holding a hand over the indoor non-contact sensor 36B after entering the lavatory, and therefore it is not necessary for the user to touch the door 20 or the contact sensor, which is naturally advantageous in preventing the transmission of novel coronavirus in the interior and also advantageous in improving the user-friendliness of the lavatory 1002 because the user does not have to waste time waiting and can immediately close the door 20.

In the present embodiment, when the human detecting sensor 38 detects a person and the indoor non-contact sensor 36B that detects in a non-contact manner operation of a person holding a hand over the indoor non-contact sensor 36B detects a person, the control unit 48 causes the actuator 44 to move the door 20 from the closed position to the open position.

In this manner, the user inside the lavatory 1002 can open the door 20 by holding a hand over the indoor non-contact sensor 36B, and therefore it is not necessary for the user to touch the door 20 or the contact sensor, which is naturally advantageous in preventing the transmission of novel coronavirus in the interior and also advantageous in improving the user-friendliness of the lavatory 1002 because the user does not have to waste time waiting and can immediately open the door 20.

In the present embodiment, when the human detecting sensor 38 detects nothing, and the second predetermined time T2 has elapsed in the state where the door 20 is located at the open position, the control unit 48 causes the actuator 44 to move the door 20 from the open position to the closed position.

Thus, the door 20 automatically closes when the second predetermined time T2 has elapsed in the state where the user is not present in the lavatory 1002 after the user leaves the lavatory, and therefore it is not necessary for the user after using the lavatory 1002 to touch the door 20 or the contact sensor, which is naturally advantageous in preventing the transmission of novel coronavirus in the interior and also advantageous in improving the user-friendliness of the lavatory 1002 because the user does not need to perform special operations.

In the present embodiment, when the third predetermined time T3 has elapsed in the state where the door 20 is located at the open position and the human detecting sensor 38 detects a person, the control unit 48 causes the actuator 44 to move the door 20 from the open position to the closed position.

Thus, after the user using the lavatory 1002 leaves the lavatory, the door 20 is automatically closed when the third predetermined time T3 has elapsed after the next user who has been waiting enters and the human detecting sensor 38 detects a person, and therefore it is not necessary for the next user to touch the door 20 or the contact sensor, which is naturally advantageous in preventing the transmission of novel coronavirus in the interior and also advantageous in improving the user-friendliness of the lavatory 1002 because the user does not need to perform special operations.

If the user using the lavatory 1002 (hereinafter referred to as the same user) does not leave the lavatory and remain inside the lavatory 1002, the door 20 is automatically closed when the third predetermined time T3 has elapsed.

**In** that case, when the same user desires to continuously use the lavatory 1002, the user can use the lavatory 1002 as intended.

On the other hand, when the same user desires to leave the lavatory 1002, the same user can leave the lavatory by opening the door 20 as intended by holding a hand over the indoor non-contact sensor 36B.

This is advantageous in improving the user-friendliness of the lavatory 1002.

**In** the present embodiment, in the case where a person or object interferes with the door 20 and the movement of the door 20 becomes abnormal during the movement of the door 20, the control unit 48 cuts off the energization to the electric motor 66 to set the driving force applied from the electric motor 66 to the door 20 to zero.

Thus, when the door 20 interferes with a person or object during movement of the door 20 from the closed position to the open position, the driving force of the electric motor 66 becomes zero so as to stop the force applied from the door 20 to a person or object, which is advantageous in protecting the person or object from the door 20.

In the case where the door 20 during movement interferes with a person or object, the following four usage situations occur depending on whether the user is present inside or outside the lavatory 1002, and whether the user desires to use the lavatory 1002 (before or after the use of the lavatory 1002).
1) When the user is present inside the lavatory 1002, and desires to use the lavatory 1002, the user can use the lavatory 1002 as intended.
2) When the user has left the lavatory 1002 to the outside, and desires to use the lavatory 1002, the user can use the lavatory 1002 by holding a hand over the outdoor non-contact sensor 36A to move the door 20 to the open position and enter the lavatory 1002.
3) When the user is present inside the lavatory 1002, and does not desire to use the lavatory 1002 because the user has already used the lavatory 1002, the user can leave the lavatory 1002 to the outside after holding a hand over the indoor non-contact sensor 36B to move the door 20 to the open position.
4) When the user has left the lavatory 1002 to the outside, and does not desire to use the lavatory 1002 because the user has already used the lavatory 1002, the user needs only to go away from the lavatory 1002, and another user can use the lavatory 1002 because at this time the door 20 is kept at the closed position.

Thus, in any of the above-described usage situations 1) to 4), the user can use the lavatory 1002 as necessary, which is advantageous in improving the user-friendliness of the lavatory 1002.

### Second Embodiment

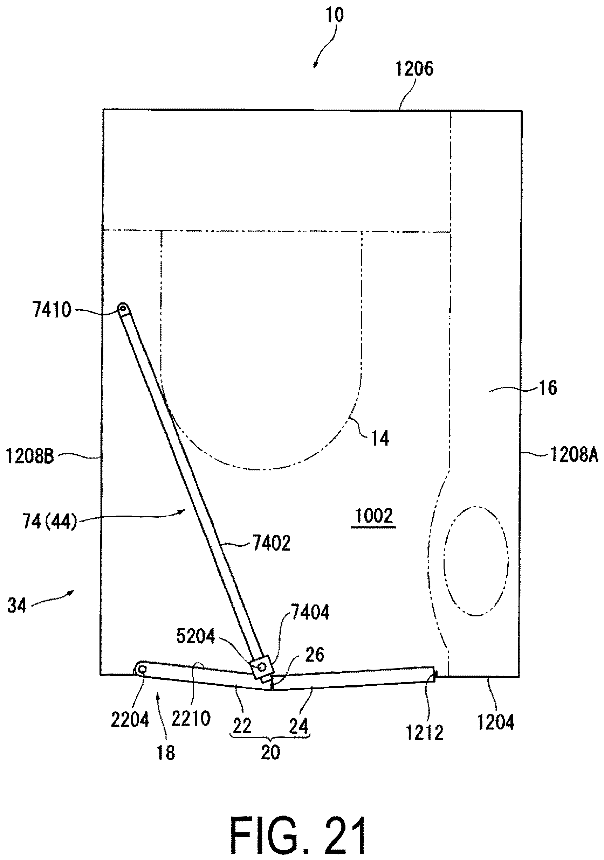

Next, a second embodiment is described with reference to FIGS. 21 to 24.

In the following description, the same parts and components as those of the above-described first embodiment are denoted with the same the reference numerals and their description is omitted to mainly describe differences.

The second embodiment is different from the first embodiment in that an electric linear actuator 74 is used as the actuator 44, and that the power transmission mechanism 46 is omitted.

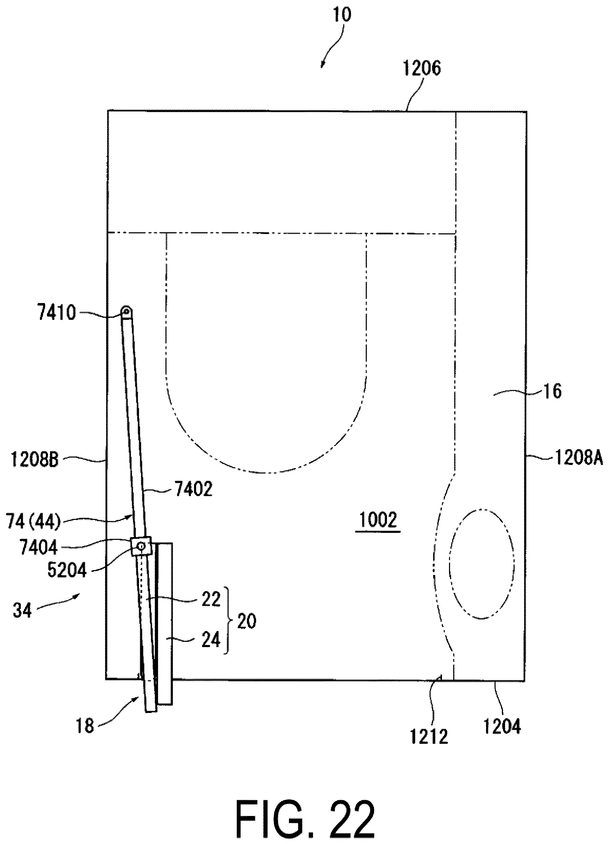

As illustrated in FIGS. 21 and 22, the electric linear actuator 74 includes a shaft 7402 with a slender elongated shape, and a slider 7404 provided to be movable along the longitudinal direction of the shaft 7402 and non-rotatable around the axial center of the shaft 7402.

The electric linear actuator 74 is disposed at a location on the upper side of the door 20 and relatively closer to the second side wall 1208B.

The shaft 7402 includes magnets arranged in the longitudinal direction, and the N pole and S pole of each magnet alternate along the longitudinal direction of the shaft 740.

The base end as one end of the shaft 7402 in the longitudinal direction is supported swingably in the horizontal direction by a support shaft 7410 disposed at a location relatively closer to the second side wall 1208B and relatively closer to the ceiling wall 1210 with the axial center aligned with the up-down direction, and the tip end as the other end of the shaft 7402 in the longitudinal direction extends to the direction of the entrance 1212. In the present embodiment, the support shaft 7410 is attached to the ceiling wall 1210.

The slider 7404 is provided with a build-in coil, and when a thrust is generated at the slider 7404 through the magnetism interaction between the magnetic field generated at the coil with a driving signal supplied to the coil from the control unit 48 and the magnetic field of each magnet, the slider 7404 moves back and forth straight along the longitudinal direction of the shaft 7402, i.e., moves in the direction toward and away from the entrance 1212.

An encoder 75 that detects the movement amount of the slider 7404 and supplies a movement amount detection signal to the control unit 48 is provided.

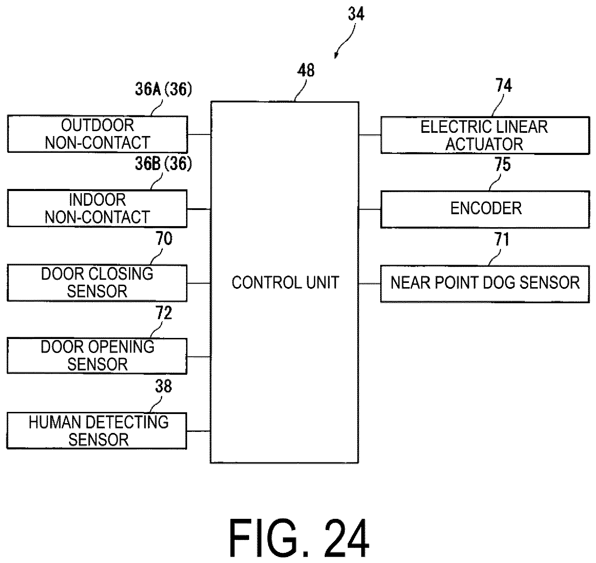

As illustrated in FIG. 24, in the second embodiment, the outdoor non-contact sensor 36A, the indoor non-contact sensor 36B, the door closing sensor 70, the near point dog sensor 71, the door opening sensor 72, the human detecting sensor 38, and the control unit 48 as those of the first embodiment are provided.

The control unit 48 controls the movement direction and movement stroke of the slider 7404 by supplying to the coil of the slider 7404 the driving signal generated based on the detection signal of the above-described sensors.

With reference to FIG. 4 again, as in the first embodiment, the engaged member 40 is located on the inner surface side of the door 20 located inside the lavatory 1002 and on the upper side of the door 20.

The bracket 50 is provided at the upper end of the first door member 22, and the engaged member 40 is composed of the roller 5204 provided at the mounting plate part 5006 of the bracket 50.

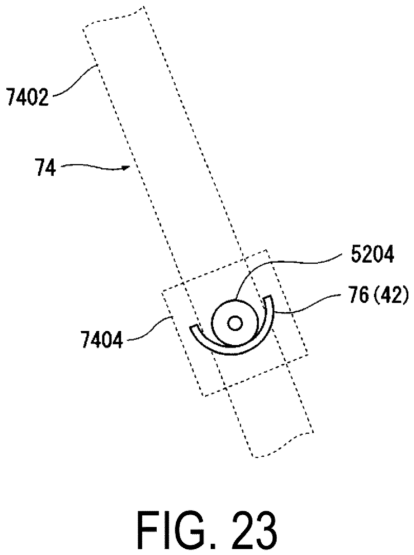

As illustrated in FIG. 23, a curved plate 76 making up the engaging member 42 extended in a curved shape is provided at the bottom surface of the slider 7404.

The curved plate 76 is provided at a location on the upper side of the door 20 inside the lavatory 1002, and is provided in a shape that opens in the direction away from the door 20 and is engageable with the roller 5204 from the door 20 side from the closed position of the door 20 to the open position of the door 2.

Thus, when the door 20 is manually opened, the roller 5204 provided in the first door member 22 moves in the direction away from the entrance 1212 without interfering the engaging member 42, and thus, the operation of manually moving the door 20 from the closed position to the open position is smoothly performed even with the powered door opening mechanism 34.

Although omitted in FIGS. 21 and 22, as in the first embodiment, the decorative panel 68 that covers the electric linear actuator 74 from the lower side is provided, and the decorative panel 68 is provided with the long groove 6802 that extends along the movement trajectory of the upright plate part 5004 of the bracket 50 that moves along with the movement of the first door member 22 between the closed position and the open position. The bracket 50 can smoothly move at the long groove 6802 (see FIG. 11).

As illustrated in FIG. 21, at the closed position of the door 20, the slider 7404 is located at the initial position relatively closer to the end of the shaft 7402, the slider 7404 moves in the direction away from the entrance 1212 along the shaft 7402 with the detection signal of the outdoor non-contact sensor 36A, and the first door member 22 moves from the closed position to the open position through the engagement of the curved plate 76 and the roller 5204.

When the slider 7404 moves along the shaft 7402 in the direction away from the entrance 1212, the first door member 22 moves from the closed position to the open position, and therefore the shaft 7402 follows the movement of the first door member 22 to swing in the direction in which its end approaches the second side wall 1208B with the support shaft 7410 as a fulcrum.

Then, as illustrated in FIG. 22, the first door member 22 and the second door member 24 overlap at the open position of the door 20 such that the slider 7404 is set to the open position, and that the end side portion of the shaft 7402 and the slider 7404 are located over the overlapped first door member 22 and second door member 24.

As in the first embodiment, the movement of the door 20 from the open position to the closed position is performed such that the movement of the roller 5204 in the direction toward the entrance 1212 and the movement of the door 20 from the open position to the closed position are constrained by the curved plate 76 due to the roller 5204 engaged with the curved plate 76 against the biasing force of the torsion coil spring 30 provided in the door 20, and the movement of the roller 5204 in the direction toward the entrance 1212 and the movement of the door 20 from the open position to the closed position are performed in accordance with the movement amount of the slider 7404 along the longitudinal direction of the shaft 7402, thus noiselessly and quietly setting the door 20 to the closed position.

The door 20 is biased to move to the closed position with the biasing force of the torsion coil spring 30 provided in the door 20, and is provided with the damper not illustrated in the drawing that reduces the impact of closing the entrance 1212, and therefore the movement of the slider 7404 in the direction toward the entrance 1212 at the open position of the door 20 may be omitted.

In this case, it suffices to set the slider 7404 to a free state that is movable along the shaft 7402 by stopping the supply of the driving signal from the control unit 48 to the slider 7404, i.e., stopping the energization to the coil instead of moving the slider 7404 in the direction toward the entrance 1212.

In the second embodiment, the normal operation in the case where the user uses the lavatory 1002 and the operation of a case where the door 20 interferes with a person or object are the same as those described with reference to FIGS. 18, 19, and 20 except that the electric linear actuator 74 is used instead of the electric motor 66 and that the power transmission mechanism 46 is omitted.

In the second embodiment, the operations in the case where the door 20 is manually moved to the open position in a fault or power loss condition and the case where the functions of the electric motor 66 and the control unit 48 are forcibly switched to disabled or enabled in maintenance are also the same as those of the first embodiment except that the electric linear actuator 74 is used instead of the electric motor 66 and that the power transmission mechanism 46 is omitted.

The second embodiment also achieves the same effects as those of the first embodiment, and the second embodiment is more advantageous in reducing the weight of the powered door opening mechanism 34 in comparison with the first embodiment because the power transmission mechanism 46 is omitted.

The present invention is also naturally applicable to a case where the door 20 for opening and closing the entrance 1212 of the lavatory 1002 is composed of a single openable and closable door.

### Reference Signs List

10 Aircraft lavatory unit
1002 Lavatory
12 Housing
1202 Floor board
1204 Front wall
1206 Rear wall
1208A First side wall
1208B Second side wall
1210 Ceiling wall
1212 Entrance
1214 Opening
1216 End portion of bolt
14 Toilet
16 Sink
18 Door opening and closing mechanism
20 Door
2002 Indicator
2004 Knob
22 First door member
2202 First bracket
2204 Shaft
2210 Inner surface
24 Second door member
2402 Second bracket
2404 Slide member
26 Coupled part
28 Shaft
30 Torsion coil spring
32 Mounting frame
34 Powered door opening mechanism
36 Non-contact sensor
36A Outdoor non-contact sensor
36B Indoor non-contact sensor
38 Human detecting sensor
40 Engaged member
42 Engaging member
42A Arm
42B Curved plate
4202 Arm support shaft
4204 Body plate part
4206 Bent plate part
4210 First collar
4212 Second collar
4214 Roller
4216 Support shaft
4218 Nut
4220, 4222 Pair of mounting pieces
44 Actuator
46 Power transmission mechanism
46A Belt and pulley mechanism
4602 Support frame
4604 Belt (Toothed belt)
4604A One end portion
4604B Other end portion
4606 Toothed driving pulley
4608 Toothed first guide pulley
4610 Toothed second guide pulley
4612A, 4612B Pair of rollers
4614A, 4614B Pair of toothed moving pulleys
4616A, 4616B Pair of mounting pieces
4618 Rail
4620 Moving bracket
4621 Mounting piece
4622A, 4622B Shaft
4624 Constant load mainspring
4626 Door stop detection piece
4627 Near point detection piece
4628 Door open detection piece
48 Control unit
50 Bracket
5002 Base plate part
5004 Upright plate part
5006 Mounting plate part
52 Cam follower
5202 Support shaft
5204 Roller
5206 Nut
54 Arm bracket
5402 Upper plate part
5404 Lower plate part
5406 Side plate part
5410 Pin
56 Pressing plate
58 Bearing
60A, 60B Upper and lower washers
62 Torsion coil spring
6202 Coil part
6204 Leg part
64 Initial position stopper
66 Electric motor
6602 Output shaft
67 Encoder
68 Decorative panel
6802 Long groove
70 Door closing sensor
71 Near point dog sensor
72 Door opening sensor
74 Electric linear actuator
7402 Shaft
7404 Slider
7410 Support shaft
75 Encoder
76 Curved plate

## Claims

1. A door opening and closing mechanism (18) for an entrance (1212) of an aircraft lavatory unit (10), the door opening and closing mechanism (18) comprising:
a door (20) manually movable between a closed position for closing an entrance (1212) of a lavatory (1002) and an open position for opening the entrance and always biased to be at the closed position; and
a powered door opening mechanism (34) configured to move the door (20) from the closed position to the open position;
the powered door opening mechanism comprising (34) an outdoor non-contact sensor (36A) configured to be provided outside the lavatory (1002) and configured to detect in a non-contact manner operation of a person holding a hand over the outdoor non-contact sensor (36A),
a human detecting sensor (38) configured to detect presence of a person inside the lavatory (1002),
an actuator (44) configured to move the door (20), and
a control unit (48) configured to control the actuator (44), and
the control unit (48) causing, in a case where the human detecting sensor (38) detects nothing, the actuator (44) to move the door (20) from the closed position to the open position when the outdoor non-contact sensor (36A) detects a person,
wherein when the human detecting sensor (38) detects a person, the door (20) is located at the open position, and a first predetermined time has elapsed, the control unit causes the actuator (44) to move the door (20) from the open position to the closed position.

2. The door opening and closing mechanism (18) for an entrance (1212) of an aircraft lavatory unit (10) according to claim 1, wherein when the human detecting sensor (38) detects a person, the control unit prohibits the actuator (44) from moving the door (20) from the closed position to the open position regardless of whether the outdoor non-contact sensor (36A) detects a person.

3. The door opening and closing mechanism (18) for an entrance (1212) of an aircraft lavatory unit (10) according to claim 1, further comprising an indoor non-contact sensor (36B) configured to be provided inside the lavatory (1002) and configured to detect in a non-contact manner operation of a person holding a hand over the indoor non-contact sensor (36B), wherein
when the human detecting sensor (38) detects a person, the door (20) is located at the open position, and the indoor non-contact sensor (36B) detects a person, the control unit (48) causes the actuator (44) to move the door (20) from the open position to the closed position.

4. The door opening and closing mechanism (18) for an entrance (1212) of an aircraft lavatory unit (10) according to claim 1, further comprising an indoor non-contact sensor (36B) configured to be provided inside the lavatory (1002) and configured to detect in a non-contact manner operation of a person holding a hand over the indoor non-contact sensor (36B), wherein
when the human detecting sensor (38) detects a person, the door (20) located at the closed position, and the indoor non-contact sensor (36B) detects a person, the control unit (48) causes the actuator (44) to move the door (20) from the closed position to the open position.

5. The door opening and closing mechanism (18) for an entrance (1212) of an aircraft lavatory unit (10) according to claim 4, wherein when the human detecting sensor (38) detects nothing and a second predetermined time has elapsed in a state where the door (20) is located at the open position, the control unit (48) causes the actuator (44) to move the door from the open position to the closed position.

6. The door opening and closing mechanism (18) for an entrance (1212) of an aircraft lavatory unit (10) according to claim 4, wherein when a third predetermined time has elapsed in a state where the door (20) is located at the open position and the human detecting sensor (38) detects a person, the control unit (48) causes the actuator (44) to move the door (20) from the open position to the closed position.

7. The door opening and closing mechanism (18) for an entrance (1212) of an aircraft lavatory unit (10) according to claim 1, wherein
the actuator (44) moves the door with a driving force of an electric motor (66), and
when the door (20) is not normally moved during movement of the door (20), the control unit (48) cuts off energization to the electric motor (66) to set the driving force applied from the electric motor (66) to the door to zero.

## Patentansprüche

1. Türöffnungs- und -schließmechanismus (18) für einen Eingang (1212) einer Flugzeugtoiletteneinheit (10), der Türöffnungs- und -schließmechanismus (18) umfassend:
eine Tür (20), die zwischen einer geschlossenen Position zum Schließen eines Eingangs (1212) einer Toilette (1002) und einer offenen Position zum Öffnen des Eingangs manuell bewegbar und stets vorgespannt ist, um sich in der geschlossenen Position zu befinden; und
einen motorisierten Türöffnungsmechanismus (34), der konfiguriert ist, um die Tür (20) von der geschlossenen Position in die geöffnete Position zu bewegen;
der motorisierte Türöffnungsmechanismus umfassend (34) einen berührungsfreien Außensensor (36A), der konfiguriert ist, um außerhalb der Toilette (1002) bereitgestellt zu sein, und konfiguriert ist, um auf eine berührungsfreie Weise eine Bedienung einer Person zu erfassen, die eine Hand über den berührungsfreien Außensensor (36A) hält,
einen Menschenerfassungssensor (38), der konfiguriert ist, um eine Anwesenheit einer Person innerhalb der Toilette (1002) zu erfassen,
ein Betätigungselement (44), das konfiguriert ist, um die Tür (20) zu bewegen, und
eine Steuerungseinheit (48), die konfiguriert ist, um das Betätigungselement (44) zu steuern, und
wobei die Steuerungseinheit (48), in einem Fall, in dem der Menschenerfassungssensor (38) nichts erfasst, das Betätigungselement (44) veranlasst, die Tür (20) von der geschlossenen Position in die offene Position zu bewegen, wenn der berührungsfreie Außensensor (36A) eine Person erfasst,
wobei, wenn der Menschenerfassungssensor (38) eine Person erfasst, sich die Tür (20) in der offenen Position befindet und eine erste vorher festgelegte Zeit verstrichen ist, die Steuerungseinheit das Betätigungselement (44) veranlasst, die Tür (20) von der offenen Position in die geschlossene Position zu bewegen.

2. Türöffnungs- und -schließmechanismus (18) für einen Eingang (1212) einer Flugzeugtoiletteneinheit (10) nach Anspruch 1, wobei, wenn der Menschenerfassungssensor (38) eine Person erfasst, die Steuerungseinheit das Betätigungselement (44) daran hindert, die Tür (20) von der geschlossenen Position in die offene Position zu bewegen, unabhängig davon, ob der berührungsfreie Außensensor (36A) eine Person erfasst.

3. Türöffnungs- und -schließmechanismus (18) für einen Eingang (1212) einer Flugzeugtoiletteneinheit (10) nach Anspruch 1, ferner umfassend einen berührungsfreien Innensensor (36B), der konfiguriert ist, um innerhalb der Toilette (1002) bereitgestellt zu sein, und konfiguriert ist, um auf eine berührungsfreie Weise eine Bedienung einer Person zu erfassen, die eine Hand über den berührungsfreien Innensensor (36B) hält, wobei,
wenn der Menschenerfassungssensor (38) eine Person erfasst, sich die Tür (20) in der offenen Position befindet und der berührungsfreie Innensensor (36B) eine Person erfasst, die Steuerungseinheit (48) das Betätigungselement (44) veranlasst, die Tür (20) von der offenen Position in die geschlossene Position zu bewegen.

4. Türöffnungs- und -schließmechanismus (18) für einen Eingang (1212) einer Flugzeugtoiletteneinheit (10) nach Anspruch 1, ferner umfassend einen berührungsfreien Innensensor (36B), der konfiguriert ist, um innerhalb der Toilette (1002) bereitgestellt zu sein, und konfiguriert ist, um auf eine berührungsfreie Weise eine Bedienung einer Person zu erfassen, die eine Hand über den berührungsfreien Innensensor (36B) hält, wobei,
wenn der Menschenerfassungssensor (38) eine Person erfasst, sich die Tür (20) in der geschlossenen Position befindet und der berührungsfreie Innensensor (36B) eine Person erfasst, die Steuerungseinheit (48) das Betätigungselement (44) veranlasst, die Tür (20) von der geschlossenen Position in die offene Position zu bewegen.

5. Türöffnungs- und -schließmechanismus (18) für einen Eingang (1212) einer Flugzeugtoiletteneinheit (10) nach Anspruch 4, wobei, wenn der Menschenerfassungssensor (38) nichts erfasst und eine zweite vorher festgelegte Zeit in einem Zustand verstrichen ist, in dem sich die Tür (20) in der offenen Position befindet, die Steuerungseinheit (48) das Betätigungselement (44) veranlasst, die Tür von der offenen Position in die geschlossene Position zu bewegen.

6. Türöffnungs- und -schließmechanismus (18) für einen Eingang (1212) einer Flugzeugtoiletteneinheit (10) nach Anspruch 4, wobei, wenn eine dritte vorher festgelegte Zeit in einem Zustand verstrichen ist, in dem sich die Tür (20) in der offenen Position befindet und der Menschenerfassungssensor (38) eine Person erfasst, die Steuerungseinheit (48) das Betätigungselement (44) veranlasst, die Tür (20) von der offenen Position in die geschlossene Position zu bewegen.

7. Türöffnungs- und -schließmechanismus (18) für einen Eingang (1212) einer Flugzeugtoiletteneinheit (10) nach Anspruch 1, wobei
das Betätigungselement (44) die Tür mit einer Antriebskraft eines elektrischen Motors (66) bewegt und,
wenn die Tür (20) während einer Bewegung der Tür (20) nicht normal bewegt wird, die Steuerungseinheit (48) eine Bestromung des elektrischen Motors (66) unterbricht, um die Antriebskraft, die von dem elektrischen Motor (66) auf die Tür ausgeübt wird, auf null zu setzen.

## Revendications

1. Mécanisme d'ouverture et de fermeture de porte (18) pour une entrée (1212) d'une unité de toilettes d'aéronef (10), le mécanisme d'ouverture et de fermeture de porte (18) comprenant :
une porte (20) déplaçable manuellement entre une position fermée pour fermer une entrée (1212) de toilettes (1002) et une position ouverte pour ouvrir l'entrée et sollicitée en permanence pour être dans la position fermée ; et
un mécanisme motorisé d'ouverture de porte (34) conçu pour déplacer la porte (20) de la position fermée vers la position ouverte ;
le mécanisme motorisé d'ouverture de porte comprenant (34) un capteur extérieur sans contact (36A) conçu pour être disposé à l'extérieur des toilettes (1002) et configuré pour détecter sans contact le geste d'une personne plaçant sa main au-dessus du capteur extérieur sans contact (36A),
un capteur de détection de présence humaine (38) configuré pour détecter la présence d'une personne à l'intérieur des toilettes (1002),
un actionneur (44) conçu pour déplacer la porte (20), et
une unité de commande (48) configurée pour commander l'actionneur (44), et
l'unité de commande (48) amenant l'actionneur (44), dans le cas où le capteur de détection de présence humaine (38) ne détecte rien, à déplacer la porte (20) de la position fermée vers la position ouverte lorsque le capteur extérieur sans contact (36A) détecte une personne,
dans lequel, lorsque le capteur de détection de présence humaine (38) détecte une personne, que la porte (20) se trouve en position ouverte et qu'un premier délai prédéterminé s'est écoulé, l'unité de commande amène l'actionneur (44) à déplacer la porte (20) de la position ouverte vers la position fermée.

2. Mécanisme d'ouverture et de fermeture de porte (18) pour une entrée (1212) d'une unité de toilettes d'aéronef (10) selon la revendication 1, dans lequel lorsque le capteur de détection de présence humaine (38) détecte une personne, l'unité de commande interdit à l'actionneur (44) de déplacer la porte (20) de la position fermée vers la position ouverte, indépendamment du fait que le capteur extérieur sans contact (36A) détecte ou non une personne.

3. Mécanisme d'ouverture et de fermeture de porte (18) pour une entrée (1212) d'une unité de toilettes d'aéronef (10) selon la revendication 1, comprenant en outre un capteur intérieur sans contact (36B) conçu pour être fourni à l'intérieur des toilettes (1002) et configuré pour détecter sans contact le geste d'une personne plaçant une main au-dessus du capteur intérieur sans contact (36B), dans lequel
lorsque le capteur de détection de présence humaine (38) détecte une personne, que la porte (20) se trouve en position ouverte et que le capteur intérieur sans contact (36B) détecte une personne, l'unité de commande (48) amène l'actionneur (44) à déplacer la porte (20) de la position ouverte vers la position fermée.

4. Mécanisme d'ouverture et de fermeture de porte (18) pour une entrée (1212) d'une unité de toilettes d'aéronef (10) selon la revendication 1, comprenant en outre un capteur intérieur sans contact (36B) conçu pour être fourni à l'intérieur des toilettes (1002) et configuré pour détecter sans contact le geste d'une personne plaçant une main au-dessus du capteur intérieur sans contact (36B), dans lequel
lorsque le capteur de détection de présence humaine (38) détecte une personne, que la porte (20) se trouve en position fermée, et que le capteur intérieur sans contact (36B) détecte une personne, l'unité de commande (48) amène l'actionneur (44) à déplacer la porte (20) de la position fermée vers la position ouverte.

5. Mécanisme d'ouverture et de fermeture de porte (18) pour une entrée (1212) d'une unité de toilettes d'aéronef (10) selon la revendication 4, dans lequel, lorsque le capteur de détection de présence humaine (38) ne détecte rien et qu'un second délai prédéterminé s'est écoulé alors que la porte (20) se trouve en position ouverte, l'unité de commande (48) amène l'actionneur (44) à déplacer la porte de la position ouverte vers la position fermée.

6. Mécanisme d'ouverture et de fermeture de porte (18) pour une entrée (1212) d'une unité de toilettes d'aéronef (10) selon la revendication 4, dans lequel, lorsqu'un troisième délai prédéterminé s'est écoulé alors que la porte (20) se trouve en position ouverte et que le capteur de détection de présence humaine (38) détecte une personne, l'unité de commande (48) amène l'actionneur (44) à déplacer la porte (20) de la position ouverte vers la position fermée.

7. Mécanisme d'ouverture et de fermeture de porte (18) pour une entrée (1212) d'une unité de toilettes d'aéronef (10) selon la revendication 1, dans lequel
l'actionneur (44) déplace la porte avec la force d'entraînement d'un moteur électrique (66), et
lorsque la porte (20) ne se déplace pas normalement pendant son mouvement (20), l'unité de commande (48) coupe l'alimentation du moteur électrique (66) pour ramener à zéro la force d'entraînement appliquée par le moteur électrique (66) à la porte.
